# EUROPEAN PATENT APPLICATION

(11) **EP 4 485 028 A1**
(43) Date of publication of application: **01.01.2025**
(21) Application number: 23212749.8
(22) Date of filing: 28.11.2023
(51) Int. Cl.: G02B 6/42, G02B 6/02

(54) **METHODS AND APPARATUS TO FACILITATE ALIGNMENT OF OPTICAL COMPONENTS**

(30) Priority: 28.06.2023 US 202318343587
(71) Applicant: INTEL Corporation, Santa Clara, CA 95054 (US)
(72) Inventor: SUTTAWASSUNTORN, Waiyapot, 11000 Nonthaburi (TH); OH, Young Seok, Palo Alto, 94306 (US); SOOKSAI, Aggachai, 13160 Phra Nakhon Si Ayutthaya (TH); JARUPONGVANICH, Nathaphol, 12120 Pathumthani (TH)
(74) Representative: HGF

(57) **Abstract**

Systems, apparatus, articles of manufacture, and methods to facilitate alignment of optical components are disclosed. An example apparatus includes programmable circuitry to at least one of instantiate or execute the machine readable instructions to: monitor optical power outputs of different cores in a linear array of cores in a multi-core optical fiber as a lens is moved relative to the multi-core optical fiber. The optical power outputs are based on light that is emitted from a photonic integrated circuit and passes through the lens. The programmable circuitry is to determine a final position for the lens relative to the photonic integrated circuit based on the optical power outputs.

## Description

### FIELD OF THE DISCLOSURE

This disclosure relates generally to optical devices and, more particularly, to methods and apparatus to facilitate alignment of optical components.

### BACKGROUND

Integrated circuit (IC) chips and/or semiconductor dies are routinely connected to larger circuit boards such as motherboards and other types of printed circuit boards (PCBs) via a package substrate. IC chips have exhibited increases in interconnect densities as technology has advanced. In recent years, IC chips have been implemented with optical components that enable the transmission of information via light. Such IC chips are sometimes referred to as photonic ICs (PICs). PICs often include a list source (such as a laser) to emit light and an optical element (such as a lens) to direct or focus that light toward a waveguide (such as an optical fiber) that carries the light to a different location. The quality and/or reliability of signal transmissions depend on the alignment of the laser, the lens, and the optical fiber.

### BRIEF DESCRIPTION OF THE DRAWINGS

FIG. 1 illustrates an example optical alignment system to facilitate alignment of optical components to a light source (e.g., a laser) on a photonic integrated circuit (PIC).
FIG. 2 is a cross-sectional view of the example multi-core optical fiber of the example optical alignment system of FIG. 1.
FIGS. 3 and 4 are cross-sectional views of other example multi-core optical fibers.
FIGS. 5-7 are graphs showing relationships between core positions in the example multi-core fiber of FIGS. 1 and/or 2, peak power outputs detected through ones of the cores, and lens positions associated with the detected peak power outputs.
FIG. 8 is a block diagram of an example implementation of the example alignment controller circuitry of FIG. 1.
FIGS. 9-13 are flowcharts representative of example machine readable instructions and/or example operations that may be executed, instantiated, and/or performed by example programmable circuitry to implement the alignment controller circuitry 118 of FIG. 8.
FIG. 14 is a block diagram of an example processing platform including programmable circuitry structured to execute, instantiate, and/or perform the example machine readable instructions and/or perform the example operations of FIGS. 9-13 to implement the alignment controller circuitry 118 of FIG. 8.
FIG. 15 is a block diagram of an example implementation of the programmable circuitry of FIG. 14.
FIG. 16 is a block diagram of another example implementation of the programmable circuitry of FIG. 14.

In general, the same reference numbers will be used throughout the drawing(s) and accompanying written description to refer to the same or like parts. The figures are not necessarily to scale.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

Many photonic integrated circuits (PICs) include one or more light sources (e.g., light transmitters, lasers) that emit light that serves as a transmission signal communicated to one or more other optical device(s). Frequently, the light emitted by a PIC is directed towards a fiber array unit (FAU) containing one or more optical fibers or waveguides that carry or propagate the emitted light to corresponding optical receiver(s) associated with the other optical device(s). The quality or strength (e.g., power) of an optical signal transmitted along an optical fiber depends upon the alignment of the laser (e.g., light source) on the PIC and a lens (e.g., a micro-lens and/or other similar optical element) positioned in the path of the light to focus the light into the optical fiber. The quality or strength of the optical signal also depends on the alignment of the optical fiber with the laser and the intervening lens. Thus, both the lens and the optical fiber need to be aligned relative to one another and relative to the laser to enhance (e.g., optimize or maximize) the optical coupling of the laser with the optical fiber. Typical procedures to align these three components involve moving both the lens and the optical fiber in all three XYZ directions and comparing the power of the optical signal through the fiber at various positions to determine optimum positions for both the lens and the fiber (e.g., positions where the power of the optical signal is highest). Moving both the lens and the fiber relative to the laser and relative to one another to find the optimum positions for both elements can take a significant amount of time, thereby adding to the cost of producing optical devices.

More particularly, optical alignment of a lens and an optical fiber with a laser is a multi-stage process in which a calibrated position for a reference fiber block is first determined through a reference fiber block calibration process (or simply "fiber calibration process" for short). The reference fiber block is an optical fiber that is distinct and separate from the final optical fiber used in an optical device containing the PIC (with a laser and attached lens). That is, the reference fiber block is distinct from an FAU optically coupled to the PIC in an end product. Rather, as its name implies, the reference fiber block is an optical fiber that is used as a reference to facilitate alignment of the lens with the laser of a PIC. However, as noted above, before lens alignment can be completed, the fiber calibration process is performed to determine the calibrated position for the reference fiber block. Existing fiber calibration process techniques involve movement of both the lens and the reference fiber block relative to one another and relative to the laser of the PIC. The optical power of the signal through the reference fiber block is monitored and recorded for various positions to identify positions where the optical power is highest. This process can be repeated multiple times with different samples/instances of the PIC and different samples/instances of the lens. The calibrated position for the reference fiber block can then be determined as the average of the positions associated with the peak power detected in connection with each sample.

The calibrated position determined from the fiber calibration process defines the proper (e.g. optimal) position of the reference fiber block in all three XYZ directions relative to the laser (e.g., and/or relative to one or more fiducial markers on the PIC containing the laser). Thus, the calibrated position defined along the three XYZ directions include a depth position (distance position) along a longitudinal/depth axis (extending generally away from the laser in the direction of the path of light), a lateral/horizontal position along a lateral/horizontal axis (extending generally perpendicular to the longitudinal/depth axis), and a vertical position along a vertical axis (extending generally perpendicular to both the longitudinal/depth axis and the lateral/horizontal axis). The terms used to distinguish the different axes (e.g., lateral, horizontal, vertical, etc.) used in this context are for convenience of explanation and are not intended to be fixed to any particular orientation in the real world that is independent of the laser. That is, as used herein, the longitudinal axis points away from the laser in the general direction of the path of the light emitted therefrom regardless of the direction of the path of light relative to the surrounding real world environment. Likewise, as used herein, the lateral/horizontal and the vertical axis are perpendicular or orthogonal to the longitudinal axis and to each other regardless of their orientation relative to the surrounding real world environment.

Averaging multiple samples during the fiber calibration process, as outlined above for known calibration techniques, enables a relatively accurate determination of the optimal position for the reference fiber block along the longitudinal axis or depth axis corresponding to the distance from the laser because the distance is not sensitive to variation across the samples. However, the averaging of different samples does not necessarily result in the proper (e.g., optimal) position for the reference fiber block along the lateral/horizontal axis and the vertical axis because variations across samples can have a relatively significant impact along these axes. For instance, variation across samples can arise from (i) differences in beam pitch angle for edge emitting lasers based on how the laser die (e.g., the PIC) was cleaved or etched, (ii) differences in substrate parallelism, (iii) differences in optical properties of the laser and/or lens, (iv) differences in outputs of a machine vision system used in positioning the components of different samples, and so forth. Thus, even assuming the average position across the tested samples is acceptable for those samples, there is no guarantee the average will be suitable for subsequent units of the optical device for which optical alignment is needed.

After the fiber calibration process is completed, a lens alignment process is implemented to determine a final position for the lens relative to the laser. The lens alignment process assumes an FAU to be optically coupled with the laser is at a fixed XYZ position (relative to the laser) corresponding to the calibrated position of the reference fiber block. Thus, by fixing the reference fiber block to a fixed position (the calibrated position determined during the fiber calibration process), the reference fiber block does not need to be moved during the lens alignment process. Instead, only the lens is moved or scanned relative to the laser and the reference fiber block until a final lens position is determined based on the highest power (e.g., peak power) detected through the reference fiber block for the various positions tested for the lens. Once the final lens position is determined, the lens is attached to the PIC at that position. At this point, the PIC (with the lens attached) is removed from the reference fiber block and can then be processed further to align a final optical fiber (e.g., the FAU) with the laser and associated (attached) lens.

In some instances, the same reference fiber block is used repeatedly at the same calibrated position (e.g., the fixed XYZ position) in a lens alignment process for different lenses associated with different instances (e.g., different production units) of the PIC. Thus, once the calibrated position for the reference fiber block has been determined, only the lens needs to be moved to identify the final position associated with the peak power detected for an optical signal through the reference fiber block. However, as discussed above, this can be problematic because the calibrated position for the reference fiber block may not correspond to the optimal position for the optical fiber due to differences in a subsequent unit of the PIC and lens relative to previously aligned PICs and lenses.

Existing reference fiber blocks are implemented with a single unitary optical fiber that includes a single core defining a single path, waveguide, or channel along which light can propagate. Examples disclosed herein involve a reference fiber block implemented with a multi-core optical fiber (or multi-core fiber for short) that includes multiple different cores extending along the multi-core fiber. The different cores correspond to different paths, waveguides, or channels through which light can propagate along the multi-core fiber. In some examples, the different cores are distributed across a cross-section of the multi-core fiber at a pitch or spacing that is relatively small (e.g., 50 um or less, 35 um or less, etc.). Inasmuch as the multi-core fiber is generally aligned with the longitudinal axis for the components (generally aligned with the path of light), the different positions of the cores within the multi-core fiber correspond to different positions along the lateral and vertical axes. As a result, the optical power delivered through the different cores correspond to the optical power associated with different lateral and vertical positions. Thus, as disclosed in further detail below, the calibrated position of the reference fiber block (implemented with a multi-core fiber) can be determined without having to move the fiber in the lateral and vertical directions to test different positions for the reference fiber block. That is while the reference fiber block may be moved in a first direction (e.g., the longitudinal direction), the reference fiber block is calibrated without movement of the reference fiber block in any direction transverse to the first direction. This can significantly reduce the amount of time it takes to determine the calibrated position relative to existing calibration techniques that require movement of the fiber in all three XYZ directions. Furthermore, in some examples, the fiber calibration process is completed on a single sample (a single PIC and lens) rather than having to repeat the process across multiple samples that are the averaged, thereby further reducing the time involved. Further still, in some examples, the multiple different cores within the example reference fiber block disclosed herein can be used to account for variation in the properties of the optical components (e.g., laser and lens) across different units or samples during the lens alignment process. As a result, examples disclosed herein not only reduce the time for the fiber calibration process, but they also improve the accuracy of the lens alignment process, thereby producing end products with higher quality optical signals (e.g., higher optical coupling) in less time than known approaches.

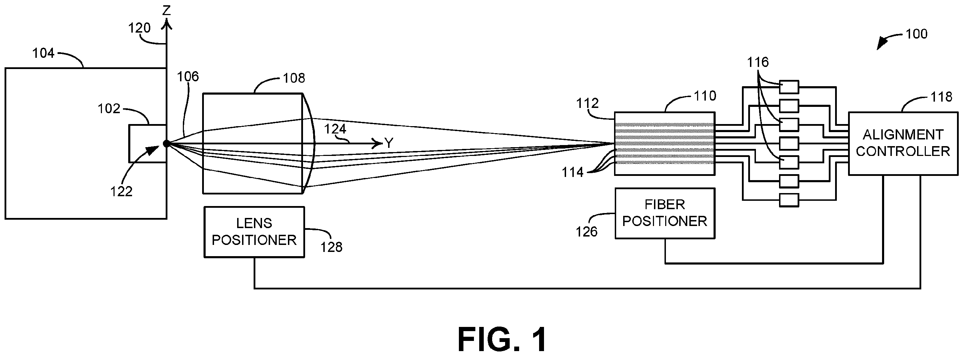

FIG. 1 illustrates an example optical alignment system 100 to facilitate alignment of optical components to a laser (e.g., a light emitter, a light transmitter, a light source) 102 on a photonic integrated circuit (PIC) 104 (e.g., a photonic die). In this example, the PIC 104 is a semiconductor (e.g., silicon) die that includes at least one laser 102 to produce an optical signal (e.g., a beam of light 106). In some examples, the PIC 104 includes more than one laser 102. Additionally, in some examples, the PIC 104 includes one or more light receivers to detect and/or receive an optical signal. In some examples, the PIC 104 includes one or more electronic components (e.g., transistors, capacitors, resistors, inductors, etc.) electrically coupled in a circuit in conjunction with the at least one laser 102.

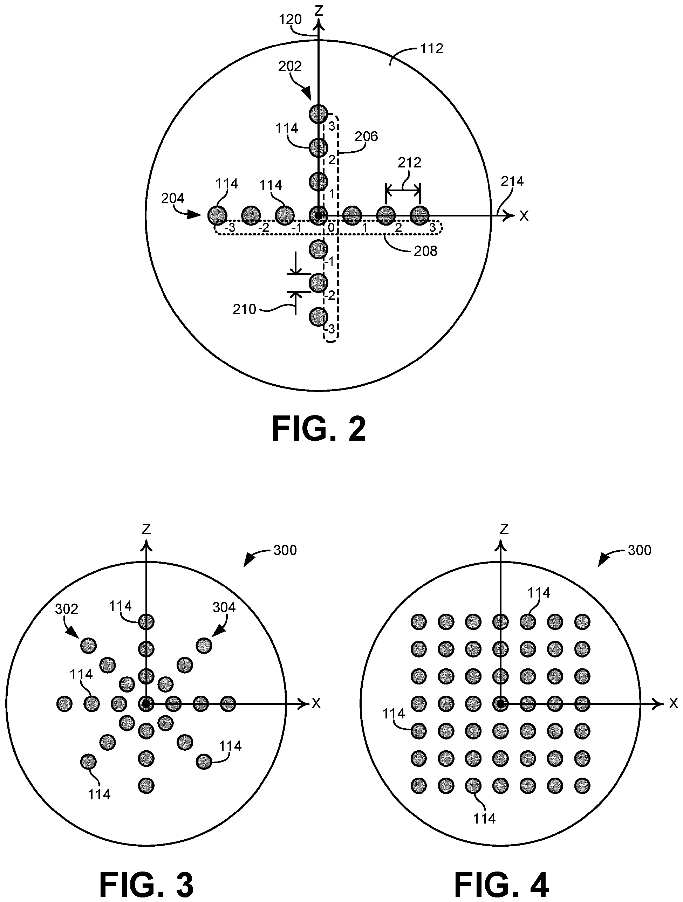

As represented in FIG. 1, an optical element such as a lens 108 is positioned adjacent to the PIC 104 in the path of the light 106 from the laser 102 to direct and/or focus the light towards a reference fiber block 110. In this example, the reference fiber block 110 is implemented with a multi-core fiber 112 that contains a plurality of optical cores 114. As used herein, an optical core (or simply a core) refers to a waveguide or channel along which light may propagate. By contrast, as used herein, an optical fiber (or simply a fiber) refers to a cable or other housing that contains an optical core. Thus, a multi-core optical fiber (or simply multi-core fiber) is an optical fiber that includes multiple different cores corresponding to separate channels or waveguides that can independently propagate light. In the illustrated example of FIG. 1, seven different cores 114 are shown in the multi-core fiber 112. However, any other suitable number of cores 114 may be implemented in the multi-core fiber 112 as discussed in further detail below in connection with FIGS. 2-4.

In the illustrated example, each optical channel of the reference fiber block 110 (e.g., each core 114 of the multi-core fiber 112) is optically coupled to a corresponding optical power meter 116 that is, in turn, communicatively coupled to alignment controller circuitry 118. The optical power meters 116 measure and/or detect the power of an optical signal being transmitted through each of the cores 114. In some examples, there are fewer power meters 116 than there are cores 114 in the multi-core fiber 112. In such examples, more than one (or all) of the cores 114 are optically coupled to a single meter 116 with one or more switches to enable the single meter 116 to monitor the power of a signal delivered via individual ones of the corresponding cores 114.

Based on outputs of the power meters 116, the alignment controller circuitry 118 can determine the coupling loss between the laser 102 and the cores 114. Generally speaking, the cores 114 that are in closer alignment with the laser 102 and the lens 108 will be associated with less coupling loss (e.g., greater optical power) than the cores 114 that are out of alignment with the laser 102 and the lens 108. As a result, the alignment controller circuitry 118 can identify an approximation for the optimal position for a core to receive and propagate the light 106 relatively quickly based on the peak power (e.g., smallest coupling loss) detected across all cores 114 being monitored. Moreover, this can be done without having to move the reference fiber block 110 in directions transverse to the path of the light 106. That is, there is no need to move the reference fiber block 110 along a vertical axis (represented by the Z axis 120 in the coordinate system shown in FIG. 1 with a point of origin 122 at the laser 102) and no need to move the reference fiber block 110 along a lateral or horizontal axis (in and out of the drawing from the perspective of FIG. 1 corresponding to the X axis 214 (shown in FIG. 2) of the coordinate system). In other examples, the point of origin 122 can be defined at a different location along the Y axis 124 (e.g., at the lens 108 instead of the laser 102).

While a location on the reference fiber block 110 associated with a peak power detected by the alignment controller circuitry 118 can be determined without moving the reference fiber block 110 in the vertical and lateral directions, the reference fiber block 110 may still need to be moved in a longitudinal or depth direction (corresponding to the Y axis 124 of the coordinate system of FIG. 1) to fully define the calibrated position for the reference fiber block 110. Accordingly, in some examples, the alignment controller circuitry 118 is operatively coupled to a fiber positioner 126 that is capable of moving the reference fiber block 110 along the Y axis 124 (e.g., along the longitudinal axis). In some examples, the fiber positioner 126 is also able to move the reference fiber block 110 along the X and Z axes 120, 214 (e.g., for initial positioning prior to implementation of the fiber calibration process and/or for moving the reference fiber block into the final calibrated position determined after completion of the fiber calibration process). However, as mentioned above, once the reference fiber block 110 is in position, in some examples, there is no need to move the reference fiber block 110 along either the X or Z axes 120, 214 during the fiber calibration process to determine the calibrated position for the reference fiber block 110.

While the reference fiber block 110 can remain fixed in the X and Z directions during the fiber calibration process, the lens 108 still needs to be moved relative to the laser 102 and relative to the reference fiber block 110 to identify the peak power detected through different ones of the cores 114. Accordingly, in some examples, the alignment controller circuitry 118 is operatively coupled to a lens positioner 128 that is capable of moving the lens 108 in all three XYZ directions. In addition to moving the lens 108 during the fiber calibration process, the lens positioner 128 can also move the lens 108 during the lens alignment process implemented after completion of the fiber calibration process. That is, as discussed above, the calibrated position for the reference fiber block 110 is the fixed position in all three XYZ directions that the reference fiber block 110 is to be secured (as determined through the fiber calibration process) to then align the lens 108 with the laser 102 during a lens alignment process. Furthermore, the same calibrated position is used in subsequent lens alignment processes to align other lenses 108 with lasers 102 of other PICs 104 (e.g., separate production units of the same optical device). In some examples, the lens positioner 128 includes and/or operates in conjunction with a lens attachment mechanism (e.g., an adhesive dispenser) to facilitate the attachment of the lens to the PIC 104 once the lens 108 is positioned in the final lens position as determined by the lens alignment process.

FIG. 2 is a cross-sectional view of the example multi-core fiber 112 of the example optical alignment system of FIG. 1. As shown in the illustrated examples, the multiple cores 114 of the multi-core fiber 112 are distributed in two dimensions. More particularly, in this example, the cores 114 are distributed along two linear arrays 202, 204 that intersect or cross one another at a center of the fiber 112. Thus, in this example, the linear arrays 202, 204 define a cross or T-shape. In this example, the first linear array 202 is aligned with the Z axis 120 (e.g., the vertical axis) and the second linear array 204 is aligned with the X axis 214 (e.g., the lateral or horizontal axis). For purposes of explanation, the cores 114 in the first linear array 202 are labelled with numbers representing Z axis core positions 206. Likewise, the cores 114 in the second linear array 204 are labelled with numbers representing X axis core positions 208. In this example, the two linear arrays 202, 204 of the cores 114 share a common core 114 at the center of both arrays (at the core position of 0 in both the X and Z axes 120, 214). In other examples, the two linear arrays 202, 204, may intersect or cross one another without sharing a common core 114. In this example, both linear arrays 202, 204 have the same number of cores. However, in other examples, the number of cores in each linear array 202, 204 may differ from one another. Further, in some examples, one or both of the linear arrays 202, 204 may have fewer or more cores 114 than the number shown in the illustrated example.

Any other suitable arrangement of the cores 114 are possible. For instance, FIG. 3 illustrates another example multi-core fiber 300 with a different example arrangement of cores 114 that includes linear arrays 302, 304 at angles relative to the X and Z axes 120, 214. In some examples, the vertical and horizontal arrays may be omitted such that only the angled arrays (e.g., in an X shape) are included. FIG. 4 illustrates another example multi-core fiber 400 with a different example arrangement of cores 114 corresponding to a two-dimensional grid containing multiple vertical arrays of the cores 114 and multiple horizontal arrays of cores 114.

Individual ones of the cores 114 can be any suitable size. In some examples, the cores 114 have a diameter 210 of approximately 9 µm. In some examples, adjacent ones of the cores 114 are positioned with a relatively small pitch or spacing 212. For instance, in some examples, the pitch 212 is less than 75 µm (e.g., 50 µm or less, 40 µm or less, 35 µm or less, 30 µm or less, etc.). The cores 114 are positioned relatively close together to increase the granularity with which different locations across the XZ plane the optical coupling between the laser 102 and the multi-core fiber 112 can be measured. That is, each core 114 serves as a separate channel or signal path for light to travel through and to be measured via a corresponding power meter 116 as shown in FIG. 1. Measurements of the optical coupling (e.g., signal power) delivered through different ones of the cores 114 is used in the fiber calibration process to determine the calibrated position for the reference fiber block 110 in a manner that reduces the movement of the reference fiber block 110 relative to known approaches that use an optical fiber with a single core. In particular, the different cores 114 in the multi-core fiber 112 effectively function as different positions of a single core fiber in the XZ plane to enable approximation of the optimal position in the XZ plane without having to move the reference fiber block 110 in that plane.

Furthermore, measurements of the optical coupling (e.g., signal power) delivered through different ones of the cores 114 also serves to more accurately determine the final position for the lens 108 during the lens alignment process than is possible using known approaches. Specifically, as detailed further below, measuring the optical power through different ones of the cores 114 during lens alignment process provides multiple data points by which an optimal position for the lens can be determined through interpolation. What is more, the multiple cores 114 enables the lens alignment process to account for variations in optical components for different units (e.g., different instances) of the PIC 104 and lens 108.

In some examples, the purpose of the fiber calibration process is to find an optimal Y position for the reference fiber block 110 corresponding to a position on the Y axis 124 for the reference fiber block 110 that results in the highest optical power delivered through the reference fiber block 110. As discussed further below, this is determined without having to move the reference fiber block 110 in the XZ plane. Once the optimal Y position is determined, the reference fiber block 110 is moved to the optimal XZ position at the optimal Y position corresponding to the final calibrated position for the reference fiber block 110. In some examples, the optimal XZ position is also determined without having to move the reference fiber block 110 in the XZ plane (though the reference fiber block 110 may be moved into position in the XZ plane after this optimal XZ position is determined). In some examples, moving the reference fiber block 110 to the optimal XZ position means one of the cores 114 in the multi-core fiber 112 is centered at or aligned with the optimal XZ position. In some examples, the core 114 at the center of the multi-core fiber 112 (e.g., the core 114 at the 0 position in both the X and Z axes 120, 214 in FIG. 2) is centered or aligned with the optimal XZ position. However, in other examples, the reference fiber block 110 can be moved to the optimal XZ position by centering or aligning a different core 114 that is not in the center of the multi-core fiber 112 with the optimal XZ position.

As different Y positions for the reference fiber block 110 are tested during the fiber calibration process, the Y position for the lens 108 needs to be changed, which will cause a change in magnification (M) of the light 106 passing through the lens 108. For fiber optic systems, the lens magnification is to be set so that the beam spot size from the laser 102 (object) is magnified to match with the mode size for the optical fiber (image) that is to propagate the light 106. Theoretically, the optimal Y position for the reference fiber block 110 and the lens 108 corresponds to when the lens magnification equals the ratio of the numerical aperture of the laser 102 to the numerical aperture of the optical fiber (e.g., when M = NA_Laser/NA_Fiber). However, the optimal Y position cannot be directly determined. Rather, in some examples, the reference fiber block 110 is moved to a particular Y position and the lens 108 is scanned or moved relative to the multiple cores 114 in the multi-core fiber 112 while monitoring the optical power output via the different cores 114 to identify a peak power detected for different ones of the cores 114. The XZ position of the lens 108 at each peak power detected for each core 114 is recorded and the process is repeated for different Y positions of the reference fiber block 110. The lens position associated with the peak power detected is referred to herein as the peak power lens position. Although it is possible to determine the peak power lens position in both X and Z directions in a single process, in some examples, the XZ position is determined by separately determining the peak power lens position along the X axes 214 and the peak power lens position along the Z axes 120.

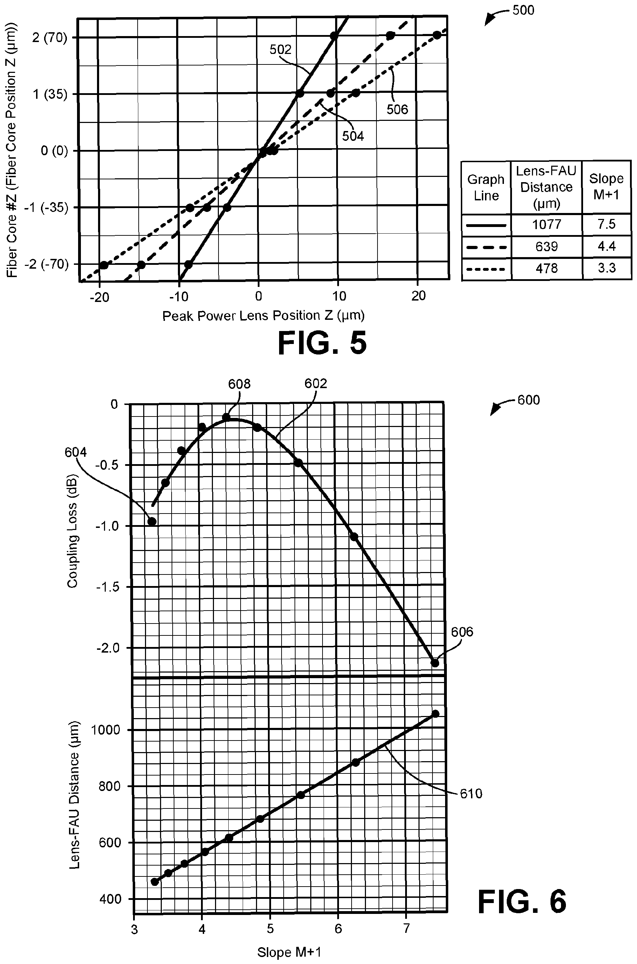

The XZ position of the lens 108 at peak power associated with different cores 114 arranged in a line (e.g., along one of the linear arrays 202, 204, 302, 304) changes linearly with the change in the XZ position of the cores 114. Thus, if the XZ positions of the cores 114 are plotted against the corresponding peak power lens positions, the plot would define a line as shown in the example graph 500 of FIG. 5. In particular, the graph 500 of FIG. 5 shows three lines 502, 504, 506 corresponding to three different distances of the reference fiber block 110 from the lens 108 (e.g., the lens-FAU distance) corresponding to a position or distance along the Y axis 124. The first line 502 corresponds to the reference fiber block 110 being at a distance of 1077 µm from the lens 108, the second line 504 corresponds to the reference fiber block 110 being at a distance of 639 µm from the lens 108, and the third line 506 corresponds to the reference fiber block 110 being at a distance of 478 µm from the lens. These distances can be converted to Y positions along the Y axis 124 relative to the point of origin 122 at the laser 102 by adding the distance between the laser 102 and the lens 108. The three lines 502, 504, 506, in the graph 500 follow plots of different Z positions of the lens 108 at peak power associated with the Z positions of five different cores 114 (the X position is assumed to be fixed in this example). As shown, the Z positions for the cores 114 are constant across all three lines 502, 504, 506 (e.g., fiber core #2 is always at 70 µm, fiber core #1 is always at 35 µm, etc.) because the reference fiber block 110 does not move in the XZ directions during this process. However, the Z position of the lens 108 changes with respect to any given core 114 as the Y position changes. The slope of the lines 502, 504, 506 is referred to herein as the slope M+1 value because it is related to the M+1 of the optical system. More particularly, in a single lens system (object-lens-image), the sensitivity between the image offset distance (e.g., the distance a fiber core is offset from the Y axis 124 (e.g., distance in the X and Z directions)) and the lens offset distance (e.g., the distance the lens 108 is offset from the Y axis 124) relative to the object position (e.g., the position of the laser 102) is equal to M+1. Similar to M+1, the slope M+1 value, as used herein, can be defined as the ratio of the change in the XZ position (or just X or Z if analyzing the axes 120, 214 independently) between two of the cores 114 to a change in the XZ position (or just X or Z) of the lens 108 at peak power detected for the two cores 114. Stated differently, the slope M+1 value is the ratio of the distance between two cores 114 to the distance between the peak power lens positions associated with the two cores 114.

In the graph 500 of FIG. 5, peak power values are plotted with respect to each core 114 along the linear array 202. However, in some examples, the slope of the lines 502, 504, 506 (e.g., the slope M+1 value) can be determined based on the peak power lens position associated with only two cores 114. In some examples, the slope M+1 value is determined based on the two outermost cores 114 at either end of a linear array of cores (e.g., the cores 114 at the Z positions of - 3 and 3 along the Z axis 120 in FIG. 2 and/or the cores 114 at the X positions of -3 and 3 along the X axis 214 in FIG. 2). Although the lens position associated with two cores 114 is sufficient to determine the slope M+1 value at the corresponding Y position (e.g., the corresponding distance between the reference fiber block 110 and the lens 108) at which the reference fiber block 110 is set, the peak value detected for each core 114 along a linear array is still used to determine the optimal Y position for the reference fiber block 110. Thus, in some examples, the lens 108 is still scanned or moved relative to each core 114 while monitoring the optical output power.

Moving the lens 108 around relative to each core 114 individual to find the location where the peak power is detected can take considerable time. In some examples, the duration of this process is shortened by determining the peak power lens position for two cores along a linear array of the cores and then defining a vector or path for the lens 108 corresponding to a line that passes through the two peak power lens positions associated with the two cores. In some examples, the two cores 114 correspond to the same two cores 114 used to determine the slope M+1 value discussed above. Once the vector or lens path has been defined between the cores 114 (and crosses all other cores 114 along the corresponding linear array), the lens 108 is moved or scanned along the vector or path and the peak power detected at each core 114 in the linear array is recorded. There is no need for the lens 108 to be moved around to search for the peak power for every core 114 in the linear array because the defined lens path should pass through the position of peak power for each core inasmuch as the cores are arranged along a linear line and the lens path is defined based on the peak power lens position for two cores along that linear path.

As discussed above, in some examples, the X axis 214 is analyzed independently of the Z axis 120 to simplify calculations. In some such examples, the lens 108 position at peak power for different cores 114 along both the X and Z axes 120, 214 are analyzed because the output beam of a laser (e.g., the laser 102) may be elliptical. That is, the numerical aperture of the laser 102 can be different between the X and Z axes 120, 214. As a result, it is possible for the optimal Y position for the reference fiber block 110 determined based on an analysis of the X axis 214 to be different from the optimal Y position determined based on an analysis of the Z axis 120. In some such examples, the two different optimal Y positions are averaged to arrive at the final optimal Y position for the reference fiber block 110.

To determine the optimal Y position for the reference fiber block 110, the highest peak power detected for each of a number of different slope M+1 values corresponding to different Y positions is identified. As discussed above, a separate peak power is recorded for each core 114 in a linear array across which the lens 108 is scanned. Thus, in this context, the highest peak power refers to the highest one of the different peak powers corresponding to each of the cores 114 across which the lens 108 was scanned. A plot of the various highest peak values at different slope M+1 values (associated with the Y positions) forms a parabola or curve 602 that opens down with a local maximum as represented in the upper portion of the graph 600 of FIG. 6. In the graph 600 of FIG. 6, the leftmost plot 604 corresponds to the third line 506 in the graph 500 of FIG. 5 with a slope M+1 value of approximately 3.3. The rightmost plot 606 in the graph 600 of FIG. 6 corresponds to the first line 502 in the graph 500 of FIG. 5 with a slope M+1 value of approximately 7.5. The uppermost plot 608 in the graph 600 of FIG. 6 corresponds to the second line 504 in the graph 500 of FIG. 5 with a slope M+1 value of approximately 4.4. In some examples, the curve 602 is calculated to fit the plots of the highest peak values and then the slope M+1 value corresponding to the maximum point on the curve 602 is identified. The slope M+1 value at this point is then used to identify the corresponding lens-FAU distance in the lower part of graph 600 along a line 610 the is calculated to fit to a plot of the different slope M+1 values calculated for each Y position analyzed during the fiber calibration process. The resulting lens-FAU distance corresponds to the optimal Y position for the calibrated position of the reference fiber block 110. The graphs 500, 600 of FIGS. 5 and 6 are specific to an analysis performed along the Z axis 120. As discussed above, the analysis may be repeated along the X axis, which may result in a slightly different optimal Y position. In such situations, the two different optimal Y positions may be averaged to define the final optimal Y position for the calibrated position of the reference fiber block 110.

Once the final optimal Y position has been determined, the reference fiber block 110 is moved to that position and then the lens 108 is scanned along the cores 114 of the multi-core fiber 112 while monitoring the signal output powers through each core 114. The position of the particular core 114 for which the highest peak power is detected is identified as the calibrated XZ position for the reference fiber block 110. In some examples, the reference fiber block 110 is moved in the XZ plane to position the center core 114 at the calibrated XY position to position the reference fiber block 110 at its final calibrated position in all three XYZ directions. In some examples, a different core 114 other than the center core 114 is moved to the calibrated XYZ position. As explained above, the inclusion of multiple cores 114 in the multi-fiber core 112 used for the reference fiber block 110 removes the need for the reference fiber block 110 to be moved in the XZ directions during the fiber calibration process (though it may be moved into position once the calibrated position is determined). As a result, the fiber calibration process can be completed significantly faster than existing approaches that involve a single core fiber that needs to be moved in all three XYZ directions in addition to the movement of the lens 108.

Once the calibrated position for the reference fiber block 110 has been determined and the block has been moved to that position, it is possible to move on to the lens alignment process. In some examples, the process to determine the final lens position through the lens alignment process is similar to the process described above for the fiber calibration process. In particular, during lens alignment, the lens 108 is moved or scanned relative to two cores 114 positioned at different locations along a linear array of the cores (e.g., the linear arrays 202, 204) while the optical power through the two cores 114 is monitored. The location of the lens 108 associated with the peak power detected through each core 114 is recorded and used to define a vector or lens path along the linear array of cores. Then, the alignment controller circuitry 118 moves the lens 108 along the lens path to be scanned across all cores 114 in the linear array. The location along the lens path where the highest peak power is detected is identified and stored as the final lens position for the lens 108.

While the above lens alignment process may be suitable to find an optimal lens position for the lens 108 used in the fiber calibration process, the lens alignment process may not identify the optimal lens position for a subsequent lens 108 being aligned with a different laser 102 on the PIC 104 or on a completely different PIC 104 (e.g., a completely separate production unit) due to variability in the optical components.

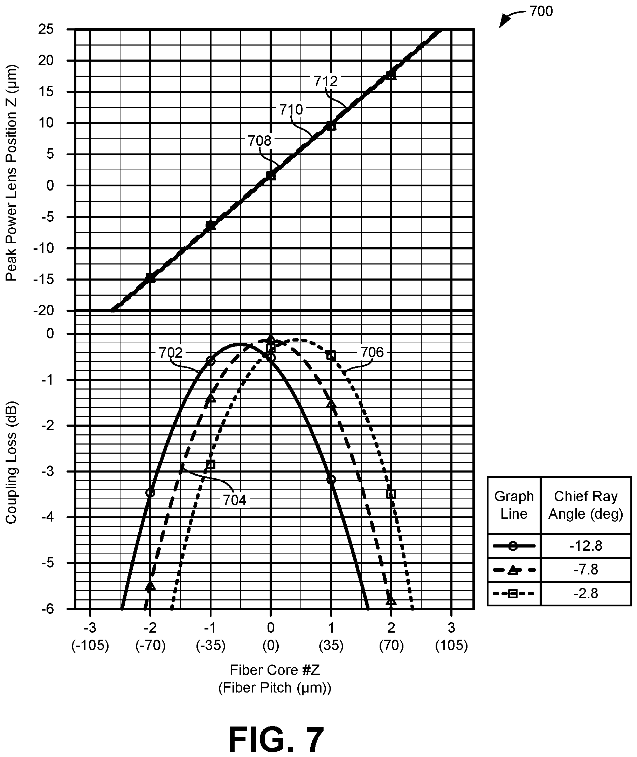

As a specific example, one variation that can arise between different lasers 102 is the angle of the beam of light (e.g., the chief ray angle) emanating from the PIC 104. Assuming the same lens 108 is used at the same position, variations in beam angle between different lasers 102 will result in variations in the angle of incident light on an optical fiber core (e.g., the cores 114). However, there is a particular angle of incident light of a core 114 that meets the condition of Snell's law to maximize the propagation of light through the core 114. Thus, any deviation from the particular angle will result in a higher coupling loss (e.g., lower power). Accordingly, in this example, the lens 108 would need to shift in position to accommodate for the variation in the angle of the beam of light to achieve peak power. The multiple different cores 114 in the example multi-core fiber 112 of the reference fiber block 110 can be used to interpolate the optimal lens position that accounts for the variation in the angle of the beam of light based on a plot of the peak power detected in each core 114 of the reference fiber block 110 across which the lens 108 is scanned as shown in bottom portion of the graph 700 of FIG. 7.

In particular, the bottom portion of the graph 700 of FIG. 7 includes three lines (e.g., parabolas, curves) 702, 704, 706 that have been fit to plots of the peak power (e.g., coupling loss) detected at different core positions corresponding to three different angles of light from the laser 102 (e.g., associated with three different instances of the PIC 104). The first line 702 is associated with a chief ray angle for the light of -12.8 degrees, the second line 704 is associated with a chief ray angle for the light of -7.8 degrees, and the third line 706 is associated with a chief ray angle for the light of - 2.8 degrees. As shown in the illustrated example, the maximum point of the second line 704 (e.g., the highest peak power) approximately aligns with the center (position 0) core 114. As such, the peak power would be directly detected during the scan of the lens 108 across the cores 114. However, the maximum point of the first and third lines 702, 706 are shifted to locations between adjacent ones of the cores 114 (e.g., the first line 702 is shifted to the left in the graph 700 and the third line 706 is shifted to the right). In some examples, the final lens position can be interpolated from the lines 708, 710, 712 (all overlapping in FIG. 7) fit to plots of the peak power lens position identified for each core 114 as shown in the upper portion of the graph 700. Specifically, the point of interpolation corresponding to the final position for the lens 108 corresponds to the maximum point on the lines 702, 706 in the bottom portion of the graph 700. Thus, in this example, the final lens position for light having a chief ray angle of -12.8 degrees (associated with the first line 702) is approximately -2.5 µm. The final lens position for light having a chief ray angle of -7.8 degrees (associated with the second line 704) is approximately 1.5 µm. The final lens position for light having a chief ray angle of -2.8 degrees (associated with the third line 704) is approximately 6 µm. Notably, these final les positions are specific to the Z axis 120. The process can be repeated to interpolate the final lens position along the X axis. This process of interpolation is not possible using known lens alignment techniques that involve a reference fiber block that contains only a single core. As such, examples disclosed herein can improve the accuracy of lens alignment to account for variation across different production units.

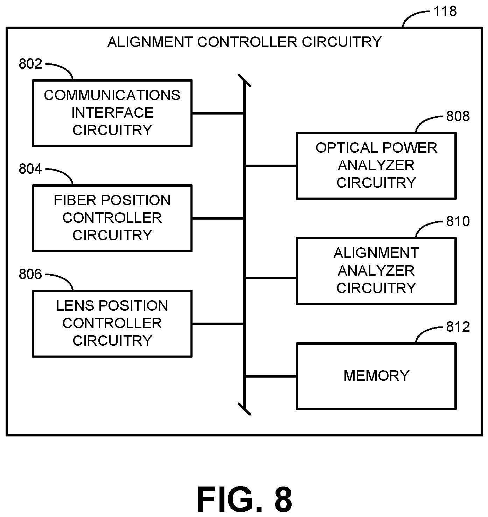

FIG. 8 is a block diagram of an example implementation of the alignment controller circuitry 118 of FIG. 1 to calibrate the position of the reference fiber block 110 (e.g., implement the fiber calibration process discussed above) and then determine a final lens position for the lens 108 (e.g., implement the lens alignment process discussed above). The example alignment controller circuitry 118 of FIG. 8 includes example communications interface circuitry 802, example fiber position controller circuitry 804, example lens position controller circuitry 806, example optical power analyzer circuitry 808, example alignment analyzer circuitry 810, and example memory 812. The alignment controller circuitry 118 of FIG. 8 may be instantiated (e.g., creating an instance of, bring into being for any length of time, materialize, implement, etc.) by programmable circuitry such as a Central Processor Unit (CPU) executing first instructions. Additionally or alternatively, the alignment controller circuitry 118 of FIG. 8 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 8 may, thus, be instantiated at the same or different times. Some or all of the circuitry of FIG. 8 may be instantiated, for example, in one or more threads executing concurrently on hardware and/or in series on hardware. Moreover, in some examples, some or all of the circuitry of FIG. 8 may be implemented by microprocessor circuitry executing instructions and/or FPGA circuitry performing operations to implement one or more virtual machines and/or containers.

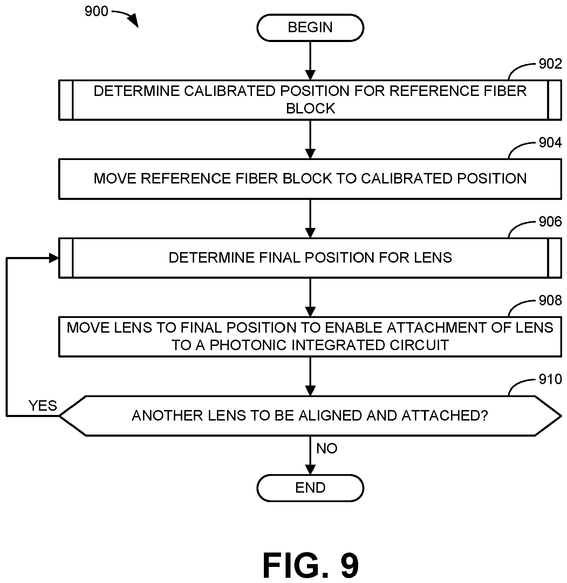

The example alignment controller circuitry 118 of FIG. 8 includes the example communications interface circuitry 802 to enable communications with one or more external components and/or devices. For example, the communications interface circuitry 802 receives sensor feedback data from the optical power meter(s) 116 coupled to the cores 114 of the multi-core fiber 112 of FIG. 1. Further, in some examples, the communications interface circuitry 802 enables communication with the fiber positioner 126 and the lens positioner 128. In some examples, the communications interface circuitry 802 is instantiated by programmable circuitry executing communications interface instructions and/or configured to perform operations such as those represented by the flowchart(s) of FIGS. 9-13.

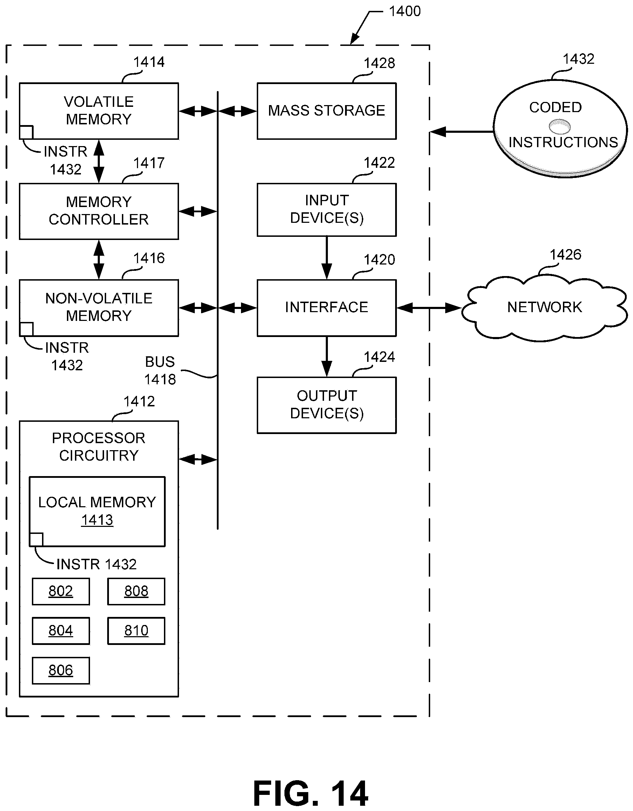

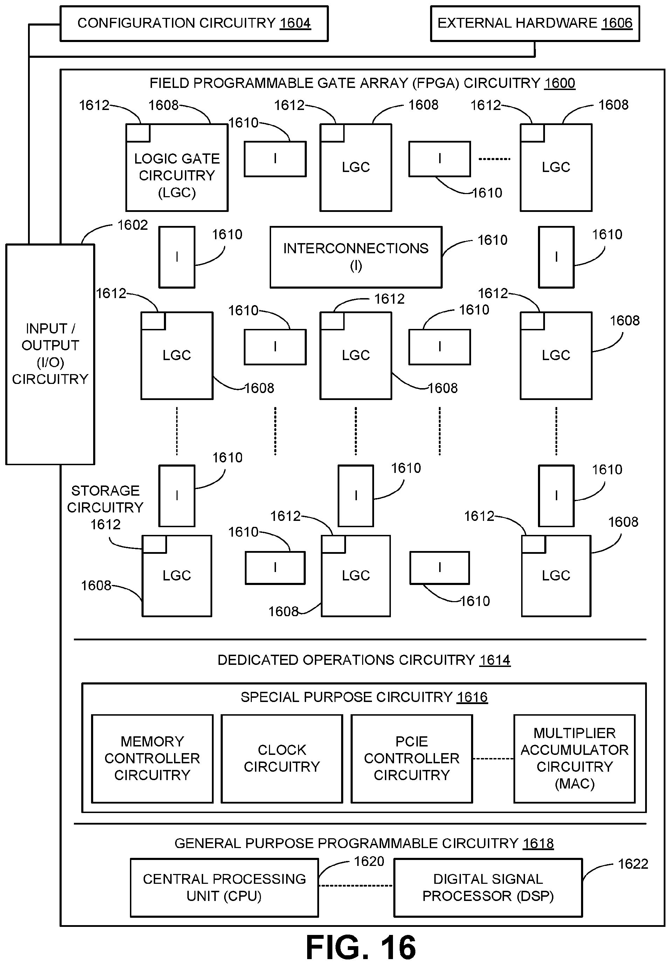

In some examples, the alignment controller circuitry 118 includes means for communicating. For example, the means for communicating may be implemented by the communications interface circuitry 802. In some examples, the communications interface circuitry 802 may be instantiated by programmable circuitry such as the example programmable circuitry 1412 of FIG. 14. In some examples, communications interface circuitry 802 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the communications interface circuitry 802 may be instantiated by any other combination of hardware, software, and/or firmware. For example, the communications interface circuitry 802 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example alignment controller circuitry 118 of FIG. 8 includes the example fiber position controller circuitry 804 to control and/or direct operations of the fiber positioner 126. In some examples, the fiber position controller circuitry 804 is instantiated by programmable circuitry executing fiber position controller instructions and/or configured to perform operations such as those represented by the flowchart(s) of FIGS. 9-13.

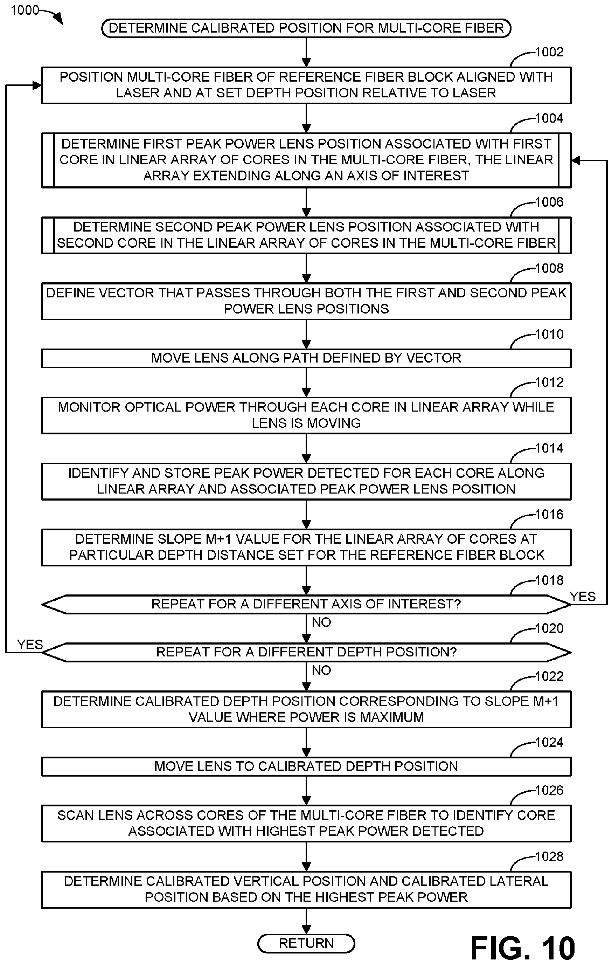

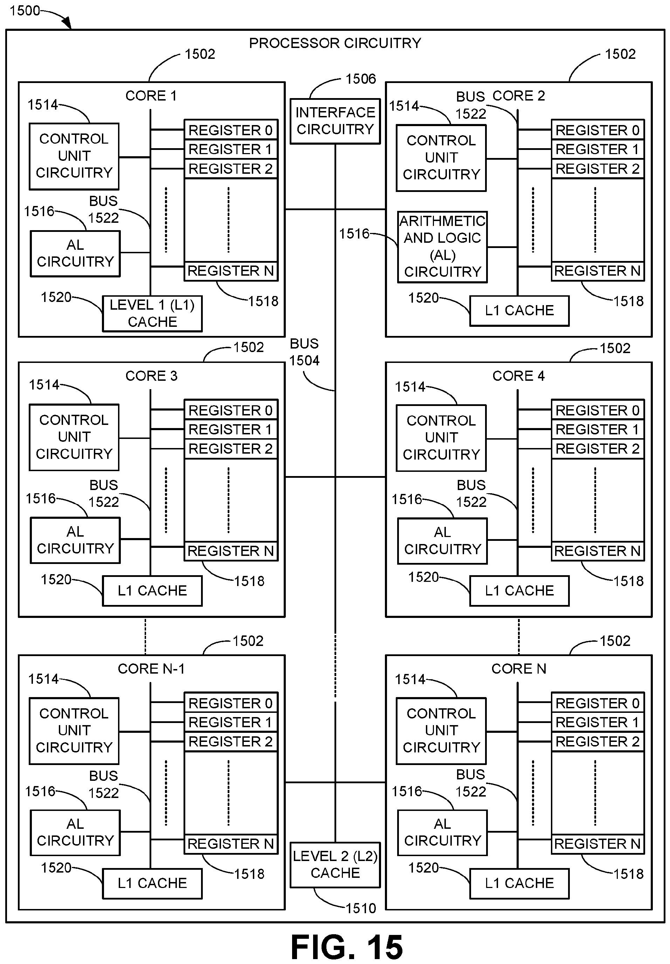

In some examples, the alignment controller circuitry 118 includes means for controlling movement of the reference fiber block 110 (e.g., means for controlling movement of a multi-core optical fiber). For example, the means for controlling movement may be implemented by the fiber position controller circuitry 804. In some examples, the fiber position controller circuitry 804 may be instantiated by programmable circuitry such as the example programmable circuitry 1412 of FIG. 14. For instance, the fiber position controller circuitry 804 may be instantiated by the example microprocessor 1500 of FIG. 15 executing machine executable instructions such as those implemented by at least block 904 of FIG. 9, and blocks 1004 and 1024 of FIG. 10. In some examples, the fiber position controller circuitry 804 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the fiber position controller circuitry 804 may be instantiated by any other combination of hardware, software, and/or firmware. For example, the fiber position controller circuitry 804 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example alignment controller circuitry 118 of FIG. 8 includes the example lens position controller circuitry 806 to control and/or direct operations of the lens positioner 128. In some examples, the lens position controller circuitry 806 is instantiated by programmable circuitry executing lens position controller instructions and/or configured to perform operations such as those represented by the flowchart(s) of FIGS. 9-13.

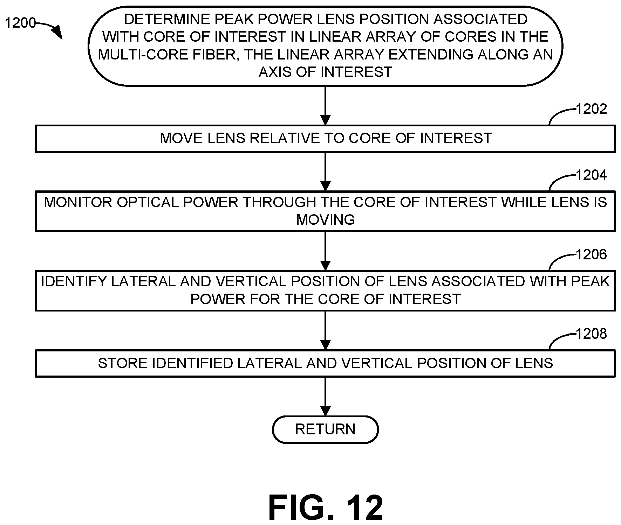

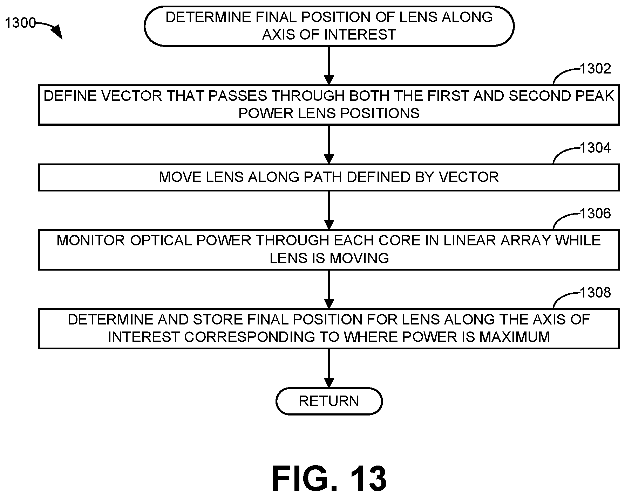

In some examples, the alignment controller circuitry 118 includes means for controlling movement of the lens 108. For example, the means for controlling movement may be implemented by the lens position controller circuitry 806. In some examples, the lens position controller circuitry 806 may be instantiated by programmable circuitry such as the example programmable circuitry 1412 of FIG. 14. For instance, the lens position controller circuitry 806 may be instantiated by the example microprocessor 1500 of FIG. 15 executing machine executable instructions such as those implemented by at least block 908 of FIG. 9, blocks 1010, 1026 of FIG. 10, block 1202 of FIG. 12, and block 1304 of FIG. 13. In some examples, lens position controller circuitry 806 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the lens position controller circuitry 806 may be instantiated by any other combination of hardware, software, and/or firmware. For example, the lens position controller circuitry 806 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example alignment controller circuitry 118 of FIG. 8 includes the example optical power analyzer circuitry 808 to monitor and/or analyze sensor feedback data from the optical power meter(s) 116 (obtained via the communications interface circuitry 802). In some examples, the optical power analyzer circuitry 808 determines and/or identifies the peak power (e.g., lowest coupling loss) detected through a given core 114. In some examples, the optical power analyzer circuitry 808 is instantiated by programmable circuitry executing optical power analyzer instructions and/or configured to perform operations such as those represented by the flowchart(s) of FIGS. 9-13.

In some examples, the alignment controller circuitry 118 includes means for monitoring optical power through optical fiber cores. For example, the means for monitoring may be implemented by the optical power analyzer circuitry 808. In some examples, the optical power analyzer circuitry 808 may be instantiated by programmable circuitry such as the example programmable circuitry 1412 of FIG. 14. For instance, the optical power analyzer circuitry 808 may be instantiated by the example microprocessor 1500 of FIG. 15 executing machine executable instructions such as those implemented by at least block 1012 of FIG. 10, block 1204 of FIG. 12, and block 1306 of FIG. 13. In some examples, optical power analyzer circuitry 808 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the optical power analyzer circuitry 808 may be instantiated by any other combination of hardware, software, and/or firmware. For example, the optical power analyzer circuitry 808 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example alignment controller circuitry 118 of FIG. 8 includes the example alignment analyzer circuitry 810 to implement and/or direct optical alignment procedures including a fiber calibration process and a lens alignment process. That is, in some examples, the alignment analyzer circuitry 810 determines and/or defines different Y positions at which the reference fiber block 110 is to be set (as controlled via the fiber position controller circuitry 804) during the fiber calibration process. Further, the example alignment analyzer circuitry 810 determines the optimal Y position (as well as the optimal X and Z positions) for the reference fiber block 110 (e.g., the calibrated position) based on an analysis of the power outputs of the cores 114 (as monitored and provided via the optical power analyzer circuitry 808) at the different Y positions selected for the fiber calibration process. Likewise, in some examples, the alignment analyzer circuitry 810 determines the optimal XYZ positions for the lens 108 (e.g., the final lens position) during a lens alignment process based on an analysis of the power outputs of the cores 114. For instance, in some examples, the alignment analyzer circuitry 810 determines the peak power detected for any given core 114 (in addition to or instead of the optical power analyzer circuitry 808) and/or determines the highest peak power across multiple different ones of the cores 114. Additionally, in some examples, the alignment analyzer circuitry 810 determines and/or defines the positions to which the lens 108 is to move and/or the vector or path along which the lens 108 is to move (which may be provided to the lens position controller circuitry 806 to implement the movement). Further, the example alignment analyzer circuitry 810 can determine the slope M+1 value based on the relative changes in the positions of the cores 114 to the changes in the position of the lens 108 when the peak power for each core 114 was detected. In some examples, the alignment analyzer circuitry 810 analyzes the peak power detected at different cores 114, the positions of the cores 114, and/or the position of the lens 108 when each peak power was detected to interpolate locations or positions for the lens 108 and/or the cores 114 associated with a maximum power to improve optical coupling between the laser 102, the lens 108, and the cores 114. In some examples, the alignment analyzer circuitry 810 is instantiated by programmable circuitry executing alignment analyzer instructions and/or configured to perform operations such as those represented by the flowchart(s) of FIGS. 9-13.

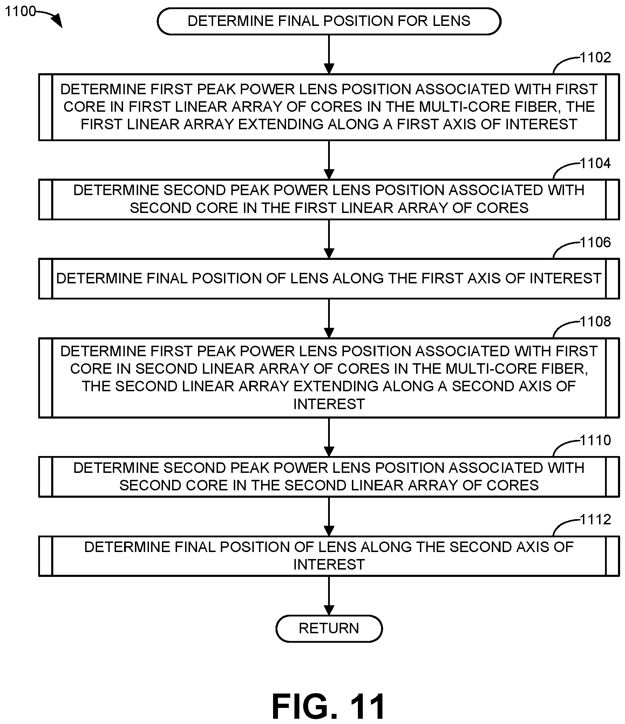

In some examples, the alignment controller circuitry 118 includes means for determining a position for at least one of the lens 108 or the reference fiber block 110. For example, the means for determining may be implemented by the alignment analyzer circuitry 810. In some examples, the alignment analyzer circuitry 810 may be instantiated by programmable circuitry such as the example programmable circuitry 1412 of FIG. 14. For instance, the alignment analyzer circuitry 810 may be instantiated by the example microprocessor 1500 of FIG. 15 executing machine executable instructions such as those implemented by at least blocks 902 and 906 of FIG. 9, blocks 1004, 1006, 1008, 1014, 1016, 1018, 1020, and 1022 of FIG. 10, blocks 1104 and 1106 of FIG. 11, block 1206 of FIG. 12, and blocks 1302 and 1308 of FIG. 13. In some examples, alignment analyzer circuitry 810 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the alignment analyzer circuitry 810 may be instantiated by any other combination of hardware, software, and/or firmware. For example, the alignment analyzer circuitry 810 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example alignment controller circuitry 118 of FIG. 8 includes the example memory 812 to store the peak values for the optical outputs of the cores 114 as determined by the optical power analyzer circuitry 808 and/or the alignment analyzer circuitry 810. Further, the example memory 812 can store other values generated and/or determined by the alignment analyzer circuitry 810 for use in the fiber calibration process and/or the lens alignment process (e.g., positions of the cores 114 and/or lens 108 associated with the peak power(s) detected, the slope M+1 values, the optimal XYZ positions for the reference fiber block 110 and the lens 108, etc.). The example memory 812 is implemented by any memory, storage device and/or storage disc for storing data such as, for example, flash memory, magnetic media, optical media, solid state memory, hard drive(s), thumb drive(s), etc. Furthermore, the data stored in the example memory 812 may be in any data format such as, for example, binary data, comma delimited data, tab delimited data, structured query language (SQL) structures, etc. While, in the illustrated example, the memory 812 is illustrated as a single component, the example memory 812 and/or any other data storage devices described herein may be implemented by any number and/or type(s) of memories.

While an example manner of implementing the alignment controller circuitry 118 of FIG. 1 is illustrated in FIG. 8, one or more of the elements, processes, and/or devices illustrated in FIG. 8 may be combined, divided, re-arranged, omitted, eliminated, and/or implemented in any other way. Further, the example communications interface circuitry 802, the example fiber position controller circuitry 804, the example lens position controller circuitry 806, the example optical power analyzer circuitry 808, the example alignment analyzer circuitry 810, and/or, more generally, the example alignment controller circuitry 118 of FIG. 8, may be implemented by hardware alone or by hardware in combination with software and/or firmware. Thus, for example, any of the example communications interface circuitry 802, the example fiber position controller circuitry 804, the example lens position controller circuitry 806, the example optical power analyzer circuitry 808, the example alignment analyzer circuitry 810, and/or, more generally, the example alignment controller circuitry 118, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example alignment controller circuitry 118 of FIG. 8 may include one or more elements, processes, and/or devices in addition to, or instead of, those illustrated in FIG. 8, and/or may include more than one of any or all of the illustrated elements, processes and devices.

Flowchart(s) representative of example machine readable instructions, which may be executed by programmable circuitry to implement and/or instantiate the alignment controller circuitry 118 of FIG. 8 and/or representative of example operations which may be performed by programmable circuitry to implement and/or instantiate the alignment controller circuitry 118 of FIG. 8, are shown in FIGS. 9-13. The machine readable instructions may be one or more executable programs or portion(s) of one or more executable programs for execution by programmable circuitry such as the programmable circuitry 1412 shown in the example processor platform 1400 discussed below in connection with FIG. 14 and/or may be one or more function(s) or portion(s) of functions to be performed by the example programmable circuitry (e.g., an FPGA) discussed below in connection with FIGS. 15 and/or 16. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 9-13, many other methods of implementing the example alignment controller circuitry 118 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 9-13 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 9 is a flowchart representative of example machine readable instructions and/or example operations 900 that may be executed, instantiated, and/or performed by programmable circuitry to implement a fiber calibration process and then a lens alignment process to position a lens (e.g., the lens 108) in a final position to be attached to an associated PIC (e.g., the PIC 104). The example machine-readable instructions and/or the example operations 900 of FIG. 9 begin at block 902, at which the example alignment controller circuitry 118 (e.g., using the example alignment analyzer circuitry 810) determines a calibrated position for a reference fiber block (e.g., the reference fiber block 110). In other words, the example alignment controller circuitry 118 implements an example fiber calibration process in accordance with teachings disclosed herein. An example implementation of block 902 is provided in further detail below in connection with FIG. 10. Thereafter, at block 904, the example fiber position controller circuitry 804 moves (using the fiber positioner 126) the reference fiber block 110 to the calibrated position.

At block 906, the example alignment controller circuitry 118 (e.g., using the example alignment analyzer circuitry 810) determines a final position for the lens 108. In other words, the example alignment controller circuitry 118 implements an example lens alignment process in accordance with teachings disclosed herein. An example implementation of block 906 is provided below in connection with FIG. 11. Thereafter, at block 908, the example lens position controller circuitry 806 moves (using the lens positioner 128) the lens 108 to the final position to enable attachment of the lens 108 to the PIC 104. At block 910, the example alignment controller circuitry 118 determines whether there is another lens 108 to be aligned and attached (e.g., in association with another laser 102 on the PIC 104 and/or in association with a separate PIC 104). If so, control returns to block 906 to repeat the lens alignment process for the new lens 108. Thus, there is no need to repeat the fiber calibration process multiple times but the reference fiber block 110 at the calibrated position can be used for the lens alignment of different lens. Further, as detailed above and further below in connection with FIG. 12, the example lens alignment process disclosed herein can account for variation in the optical characteristics of the different lens and/or other optical components for improved optical coupling. If, at block 910, there are no more lenses to be aligned and attached, the example operations 900 of FIG. 9 ends.

FIG. 10 is a flowchart representative of example machine readable instructions and/or example operations 1000 that may be executed, instantiated, and/or performed by programmable circuitry to implement block 902 of FIG. 9. In other words, the example operations 1000 of FIG. 10 implement an example fiber calibration process to determine a calibrated position for the reference fiber block 110. The example machine-readable instructions and/or the example operations 1000 of FIG. 10 begin at block 1002 where the example fiber position controller circuitry 804 positions (using the fiber positioner 126) the multi-core fiber 112 of the reference fiber block 110 aligned with the laser 102 at a set depth position relative to the laser 102 (e.g., a particular Y position). In some examples, the reference fiber block 110 is aligned with the laser 102 by centering a center core 114 of the multi-core fiber 112 with the laser 102 (e.g., centering the center core 114 with the Y axis 124). However, in other examples, a different core 114 can be centered with the laser 102. In other examples, no core 114 is centered with the laser 102.

At block 1004, the example alignment controller circuitry 118 (e.g., using the example alignment analyzer circuitry 810) determines a first peak power lens position associated with a first core 114 in a linear array of cores (e.g., the linear arrays 202, 204) in the multi-core fiber 112, the linear array extending along an axis of interest. In some examples, the axis of interest corresponds to either the X axis 214 or the Z axis 120. In other examples, the axis of interest corresponds to some other axis perpendicular to the longitudinal or Y axis 124 (e.g., an axis at an angle relative to the X and Z axes 120, 214). Further detail regarding the implementation of block 1004 is provided below in connection with the flowchart in FIG. 12. At block 1006, the example alignment controller circuitry 118 (e.g., using the example alignment analyzer circuitry 810) determines a second peak power lens position associated with a second core 114 in the linear array of cores. In some examples, the implementation of block 1006 follows the same process as at block 1004 except that the process is performed in connection with a different (e.g., the second) core 114. Thus, as with block 1004, further detail regarding the implementation of block 1006 is also provided below in connection with the flowchart in FIG. 12.

At block 1008, the example alignment analyzer circuitry 810 defines a vector that passes through both the first and second peak power lens positions. Inasmuch as both the first and second peak power lens positions are on the linear array, the vector will pass across other cores 114 in the linear array. At block 1010, the example lens position controller circuitry 806 moves (using the lens positioner 128) the lens along the path defined by the vector. At block 1012, the example optical power analyzer circuitry 808 monitors the optical power through each core 114 in the linear array while the lens is moving. At block 1014, the alignment analyzer circuitry 810 identifies and stores (e.g., in the memory 812) the peak power detected for each core 114 along the linear array and the associated peak power lens position (e.g., the position of the lens 108 at which each peak power is detected). At block 1016, the example alignment analyzer circuitry 810 determines the slope M+1 value for the linear array of cores 114 at the particular depth position of the reference fiber block 110 (set at block 1002). In other words, the example alignment analyzer circuitry 810 determines a ratio of the distance between two cores 114 (e.g., the change in fiber core offset distance) along the linear array to the distance between the peak power lens positions associated with the two cores 114 (e.g., the change in lens offset distance). This determination is akin to determining the slope of the lines 502, 504, 506 in the graph 500 of FIG. 5.

At block 1018, the example alignment analyzer circuitry 810 determines whether to repeat the process for a different axis of interest. For instance, in some examples, if the X axis 214 is the first axis of interest, the process may be repeated for the Z axis 120. In some examples, if the initial axis of interest is at an angle with respect to both the X and Z axes 120, 214 (e.g., along one of the angled linear arrays 302, 304 of FIG. 3) it may be possible to analyze both the X and Z directions in a single iteration of the process. If, at block 1018, the example alignment analyzer circuitry 810 determines to repeat the process for a different axis, control returns to block 1004. Otherwise, control advances to block 1020.

At block 1020, the example alignment analyzer circuitry 810 determines whether to repeat the process for a different depth position (e.g., a different Y position). If so, control returns to block 1002 to move the reference fiber block 110 to the different depth position. Notably, in some examples, this movement along the Y axis 124 is the only movement of the reference fiber block 110 during the fiber calibration process. That is, the reference fiber block 110 does not need to be moved in the XZ plane. If no different depth positions are to be tested, the process advances to block 1022 where the example alignment analyzer circuitry 810 determines the calibrated depth position corresponding to the slope M+1 value where the power is maximum. This determination is akin to finding the Y position associated with the point on the line 610 in the bottom portion of the graph 600 in FIG. 6 that corresponds to the maximum point on the curve 602 in the upper portion of the graph 600 in FIG. 6. As discussed above, in some examples, this analysis is done separately for the X axis 214 and the Z axis 120. Accordingly, in some examples, the separate calibrated depth positions are averaged to arrive at a final calibrated depth position.

Once the calibrated depth position (e.g., calibrated Y position) is determined (at block 1022), the calibrated positions in the lateral and vertical directions (in the X and Z directions) can be determined. Accordingly, at block 1024, the example fiber position controller circuitry 804 moves the reference fiber block 110 to the calibrated depth position. At block 1026, the example lens position controller circuitry 806 scans the lens 108 across the cores 114 of the multi-core fiber 112 to enable the example alignment analyzer circuitry to identify the core 114 associated with the highest peak power detected. At block 1028, the example alignment analyzer circuitry 810 determines the calibrated vertical position and the calibrated lateral position based on the highest peak power. With the calibrated position in each of the depth, lateral, and vertical directions being determined, the example operations 1000 of FIG. 10 end and return to complete the process of FIG. 9.

FIG. 11 is a flowchart representative of example machine readable instructions and/or example operations 1100 that may be executed, instantiated, and/or performed by programmable circuitry to implement block 906 of FIG. 9. In other words, the example operations 1100 of FIG. 11 implement an example lens alignment process to determine a final position for the lens 108. The example machine-readable instructions and/or the example operations 1100 of FIG. 11 begin at block 1102 where the example alignment controller circuitry 118 (e.g., using the example alignment analyzer circuitry 810) determines a first peak power lens position associated with a first core 114 in a first linear array of cores (e.g., the linear arrays 202, 204) in the multi-core fiber 112, the first linear array extending along a first axis of interest. In some examples, the first axis of interest corresponds to either the X axis 214 or the Z axis 120. In other examples, the axis of interest corresponds to some other axis perpendicular to the longitudinal or Y axis 124 (e.g., an axis at an angle relative to the X and Z axes 120, 214). In some examples, the implementation of block 1102 follows the same process as blocks 1004 and 1006 of FIG. 10. Thus, as with block 1004 and 1006 of FIG. 10, further detail regarding the implementation of block 1102 is provided below in connection with the flowchart in FIG. 12. At block 1104, the example alignment controller circuitry 118 (e.g., using the example alignment analyzer circuitry 810) determines a second peak power lens position associated with a second core 114 in a first linear array of cores. In some examples, the implementation of block 1104 follows the same process as block 1102 as detailed further below in connection with FIG. 12. At block 1106, the example alignment controller circuitry 118 (e.g., the example alignment analyzer circuitry 810) determines a final position for lens along the first axis of interest. An example implementation of block 1106 is provided in further detail below in connection with FIG. 13.

Blocks 1108, 1110, 1112 generally repeat the process of blocks 1102, 1104, 1106 except that block 1108, 1110, 1112 involve a second linear array of cores extending along a second axis of interest. For instance, in some examples, the first axis of interest corresponds to the X axis 214, and the second axis of interest corresponds to the Z axis 120. In such examples, the final position of the lens 108 defined along the two axes (at block 1106 and 1112) defines the final XZ position for the lens 108. Thereafter, the example operations 1100 of FIG. 11 end and return to complete the process of FIG. 9.

FIG. 12 is a flowchart representative of example machine readable instructions and/or example operations 1200 that may be executed, instantiated, and/or performed by programmable circuitry to implement any one of blocks 1004, 1006 of FIG. 10 and/or blocks 1102, 1104, 1108, 1110 of FIG. 11. In other words, the example operations 1100 of FIG. 11 may be executed, instantiated, and/or performed by programmable circuitry to determine a peak power lens position associated with a core 114 of interest in a linear array of cores in the multi-core fiber 112, the linear array extending along an axis of interest. The example machine-readable instructions and/or the example operations 1200 of FIG. 12 begin at block 1202 where the example lens position controller circuitry 806 moves (using the lens positioner 128) the lens 108 relative to the core 114 of interest. At block 1204, the example optical power analyzer circuitry 808 monitors the optical power through the core 114 of interest while the lens 108 is moving. At block 1206, the example alignment analyzer circuitry 810 identifies the lateral and vertical position of the lens 108 associated with the peak power for the core 114 of interest. In other words, the example alignment analyzer circuitry 810 determines the peak power lens position associated with the core 114 of interest. At block 1208, the example memory 812 stores the identified lateral and vertical position of the lens 108. Thereafter, the example operations 1200 of FIG. 12 end and return to complete the process of FIG. 10 and/or 11.

FIG. 13 is a flowchart representative of example machine readable instructions and/or example operations 1300 that may be executed, instantiated, and/or performed by programmable circuitry to implement blocks 1106 and 1112 of FIG. 11. In other words, the example operations 1100 of FIG. 11 may be executed, instantiated, and/or performed by programmable circuitry to determine a final position for the lens along an axis of interest (e.g., the first axis in connection with block 1106 and the second axis in connection with block 1112). The example machine-readable instructions and/or the example operations 1300 of FIG. 13 begin at block 1302, the example alignment analyzer circuitry 810 defines a vector that passes through both the first and second peak power lens positions. At block 1304, the example lens position controller circuitry 806 moves (using the lens positioner 128) the lens 108 along the path defined by the vector. At block 1306, the example optical power analyzer circuitry 808 monitors the optical power through each core 114 in the linear array while the lens 108 is moving. At block 1308, the alignment analyzer circuitry 810 determines and stores (e.g., in the memory 812) the final position for the lens along the axis of interest corresponding to where power is maximum. In some examples, this determination includes interpolating between the peak powers detected for adjacent ones of the cores 114. Specifically, this determination is akin to finding the peak power lens position associated with the point on the lines 708, 710, 712 in the upper portion of the graph 700 in FIG. 7 that corresponds to the maximum point on the corresponding curve 702, 704, 706 in the bottom portion of the graph 700 in FIG. 7. Thereafter, the example operations 1300 of FIG. 13 end and return to complete the process of FIG. 11.

FIG. 14 is a block diagram of an example programmable circuitry platform 1400 structured to execute and/or instantiate the example machine-readable instructions and/or the example operations of FIGS. 9-13 to implement the alignment controller circuitry 118 of FIG. 8. The programmable circuitry platform 1400 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 1400 of the illustrated example includes programmable circuitry 1412. The programmable circuitry 1412 of the illustrated example is hardware. For example, the programmable circuitry 1412 can be implemented by one or more integrated circuits, logic circuits, FPGAs, microprocessors, CPUs, GPUs, DSPs, and/or microcontrollers from any desired family or manufacturer. The programmable circuitry 1412 may be implemented by one or more semiconductor based (e.g., silicon based) devices. In this example, the programmable circuitry 1412 implements the example communications interface circuitry 802, the example fiber position controller circuitry 804, the example lens position controller circuitry 806, the example optical power analyzer circuitry 808, and the example alignment analyzer circuitry 810.

The programmable circuitry 1412 of the illustrated example includes a local memory 1413 (e.g., a cache, registers, etc.). The programmable circuitry 1412 of the illustrated example is in communication with main memory 1414, 1416, which includes a volatile memory 1414 and a non-volatile memory 1416, by a bus 1418. The volatile memory 1414 may be implemented by Synchronous Dynamic Random Access Memory (SDRAM), Dynamic Random Access Memory (DRAM), RAMBUS^{®} Dynamic Random Access Memory (RDRAMO), and/or any other type of RAM device. The non-volatile memory 1416 may be implemented by flash memory and/or any other desired type of memory device. Access to the main memory 1414, 1416 of the illustrated example is controlled by a memory controller 1417. In some examples, the memory controller 1417 may be implemented by one or more integrated circuits, logic circuits, microcontrollers from any desired family or manufacturer, or any other type of circuitry to manage the flow of data going to and from the main memory 1414, 1416.

The programmable circuitry platform 1400 of the illustrated example also includes interface circuitry 1420. The interface circuitry 1420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1422 are connected to the interface circuitry 1420. The input device(s) 1422 permit(s) a user (e.g., a human user, a machine user, etc.) to enter data and/or commands into the programmable circuitry 1412. The input device(s) 1422 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1400 of the illustrated example also includes one or more mass storage discs or devices 1428 to store firmware, software, and/or data. Examples of such mass storage discs or devices 1428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1432, which may be implemented by the machine readable instructions of FIGS. 9-13, may be stored in the mass storage device 1428, in the volatile memory 1414, in the non-volatile memory 1416, and/or on at least one non-transitory computer readable storage medium such as a CD or DVD which may be removable.

FIG. 15 is a block diagram of an example implementation of the programmable circuitry 1412 of FIG. 14. In this example, the programmable circuitry 1412 of FIG. 14 is implemented by a microprocessor 1500. For example, the microprocessor 1500 may be a general-purpose microprocessor (e.g., general-purpose microprocessor circuitry). The microprocessor 1500 executes some or all of the machine-readable instructions of the flowcharts of FIGS. 9-13 to effectively instantiate the circuitry of FIG. 8 as logic circuits to perform operations corresponding to those machine readable instructions. In some such examples, the circuitry of FIG. 8 is instantiated by the hardware circuits of the microprocessor 1500 in combination with the machine-readable instructions. For example, the microprocessor 1500 may be implemented by multi-core hardware circuitry such as a CPU, a DSP, a GPU, an XPU, etc. Although it may include any number of example cores 1502 (e.g., 1 core), the microprocessor 1500 of this example is a multi-core semiconductor device including N cores. The cores 1502 of the microprocessor 1500 may operate independently or may cooperate to execute machine readable instructions. For example, machine code corresponding to a firmware program, an embedded software program, or a software program may be executed by one of the cores 1502 or may be executed by multiple ones of the cores 1502 at the same or different times. In some examples, the machine code corresponding to the firmware program, the embedded software program, or the software program is split into threads and executed in parallel by two or more of the cores 1502. The software program may correspond to a portion or all of the machine readable instructions and/or operations represented by the flowcharts of FIGS. 9-13.

The cores 1502 may communicate by a first example bus 1504. In some examples, the first bus 1504 may be implemented by a communication bus to effectuate communication associated with one(s) of the cores 1502. For example, the first bus 1504 may be implemented by at least one of an Inter-Integrated Circuit (I2C) bus, a Serial Peripheral Interface (SPI) bus, a PCI bus, or a PCIe bus. Additionally or alternatively, the first bus 1504 may be implemented by any other type of computing or electrical bus. The cores 1502 may obtain data, instructions, and/or signals from one or more external devices by example interface circuitry 1506. The cores 1502 may output data, instructions, and/or signals to the one or more external devices by the interface circuitry 1506. Although the cores 1502 of this example include example local memory 1520 (e.g., Level 1 (L1) cache that may be split into an L1 data cache and an L1 instruction cache), the microprocessor 1500 also includes example shared memory 1510 that may be shared by the cores (e.g., Level 2 (L2 cache)) for high-speed access to data and/or instructions. Data and/or instructions may be transferred (e.g., shared) by writing to and/or reading from the shared memory 1510. The local memory 1520 of each of the cores 1502 and the shared memory 1510 may be part of a hierarchy of storage devices including multiple levels of cache memory and the main memory (e.g., the main memory 1414, 1416 of FIG. 14). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1502 may be referred to as a CPU, DSP, GPU, etc., or any other type of hardware circuitry. Each core 1502 includes control unit circuitry 1514, arithmetic and logic (AL) circuitry (sometimes referred to as an ALU) 1516, a plurality of registers 1518, the local memory 1520, and a second example bus 1522. Other structures may be present. For example, each core 1502 may include vector unit circuitry, single instruction multiple data (SIMD) unit circuitry, load/store unit (LSU) circuitry, branch/jump unit circuitry, floating-point unit (FPU) circuitry, etc. The control unit circuitry 1514 includes semiconductor-based circuits structured to control (e.g., coordinate) data movement within the corresponding core 1502. The AL circuitry 1516 includes semiconductor-based circuits structured to perform one or more mathematic and/or logic operations on the data within the corresponding core 1502. The AL circuitry 1516 of some examples performs integer based operations. In other examples, the AL circuitry 1516 also performs floating-point operations. In yet other examples, the AL circuitry 1516 may include first AL circuitry that performs integer-based operations and second AL circuitry that performs floating-point operations. In some examples, the AL circuitry 1516 may be referred to as an Arithmetic Logic Unit (ALU).

The registers 1518 are semiconductor-based structures to store data and/or instructions such as results of one or more of the operations performed by the AL circuitry 1516 of the corresponding core 1502. For example, the registers 1518 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1518 may be arranged in a bank as shown in FIG. 15. Alternatively, the registers 1518 may be organized in any other arrangement, format, or structure, such as by being distributed throughout the core 1502 to shorten access time. The second bus 1522 may be implemented by at least one of an I2C bus, a SPI bus, a PCI bus, or a PCIe bus.

Each core 1502 and/or, more generally, the microprocessor 1500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1500 is a semiconductor device fabricated to include many transistors interconnected to implement the structures described above in one or more integrated circuits (ICs) contained in one or more packages.

The microprocessor 1500 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1500, in the same chip package as the microprocessor 1500 and/or in one or more separate packages from the microprocessor 1500.

FIG. 16 is a block diagram of another example implementation of the programmable circuitry 1412 of FIG. 14. In this example, the programmable circuitry 1412 is implemented by FPGA circuitry 1600. For example, the FPGA circuitry 1600 may be implemented by an FPGA. The FPGA circuitry 1600 can be used, for example, to perform operations that could otherwise be performed by the example microprocessor 1500 of FIG. 15 executing corresponding machine readable instructions. However, once configured, the FPGA circuitry 1600 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1500 of FIG. 15 described above (which is a general purpose device that may be programmed to execute some or all of the machine readable instructions represented by the flowchart(s) of FIGS. 9-13 but whose interconnections and logic circuitry are fixed once fabricated), the FPGA circuitry 1600 of the example of FIG. 16 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 9-13. In particular, the FPGA circuitry 1600 may be thought of as an array of logic gates, interconnections, and switches. The switches can be programmed to change how the logic gates are interconnected by the interconnections, effectively forming one or more dedicated logic circuits (unless and until the FPGA circuitry 1600 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 9-13. As such, the FPGA circuitry 1600 may be configured and/or structured to effectively instantiate some or all of the operations/functions corresponding to the machine readable instructions of the flowchart(s) of FIGS. 9-13 as dedicated logic circuits to perform the operations/functions corresponding to those software instructions in a dedicated manner analogous to an ASIC. Therefore, the FPGA circuitry 1600 may perform the operations/functions corresponding to the some or all of the machine readable instructions of FIGS. 9-13 faster than the general-purpose microprocessor can execute the same.

In the example of FIG. 16, the FPGA circuitry 1600 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

The FPGA circuitry 1600 of FIG. 16, includes example input/output (I/O) circuitry 1602 to obtain and/or output data to/from example configuration circuitry 1604 and/or external hardware 1606. For example, the configuration circuitry 1604 may be implemented by interface circuitry that may obtain a binary file, which may be implemented by a bit stream, data, and/or machine-readable instructions, to configure the FPGA circuitry 1600, or portion(s) thereof. In some such examples, the configuration circuitry 1604 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1606 may be implemented by external hardware circuitry. For example, the external hardware 1606 may be implemented by the microprocessor 1500 of FIG. 15.

The FPGA circuitry 1600 also includes an array of example logic gate circuitry 1608, a plurality of example configurable interconnections 1610, and example storage circuitry 1612. The logic gate circuitry 1608 and the configurable interconnections 1610 are configurable to instantiate one or more operations/functions that may correspond to at least some of the machine readable instructions of FIGS. 9-13 and/or other desired operations. The logic gate circuitry 1608 shown in FIG. 16 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1608 to enable configuration of the electrical structures and/or the logic gates to form circuits to perform desired operations/functions. The logic gate circuitry 1608 may include other electrical structures such as look-up tables (LUTs), registers (e.g., flip-flops or latches), multiplexers, etc.

The configurable interconnections 1610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1608 to program desired logic circuits.

The storage circuitry 1612 of the illustrated example is structured to store result(s) of the one or more of the operations performed by corresponding logic gates. The storage circuitry 1612 may be implemented by registers or the like. In the illustrated example, the storage circuitry 1612 is distributed amongst the logic gate circuitry 1608 to facilitate access and increase execution speed.

The example FPGA circuitry 1600 of FIG. 16 also includes example dedicated operations circuitry 1614. In this example, the dedicated operations circuitry 1614 includes special purpose circuitry 1616 that may be invoked to implement commonly used functions to avoid the need to program those functions in the field. Examples of such special purpose circuitry 1616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1600 may also include example general purpose programmable circuitry 1618 such as an example CPU 1620 and/or an example DSP 1622. Other general purpose programmable circuitry 1618 may additionally or alternatively be present such as a GPU, an XPU, etc., that can be programmed to perform other operations.

Although FIGS. 15 and 16 illustrate two example implementations of the programmable circuitry 1412 of FIG. 14, many other approaches are contemplated. For example, FPGA circuitry may include an on-board CPU, such as one or more of the example CPU 1620 of FIG. 15. Therefore, the programmable circuitry 1412 of FIG. 14 may additionally be implemented by combining at least the example microprocessor 1500 of FIG. 15 and the example FPGA circuitry 1600 of FIG. 16. In some such hybrid examples, one or more cores 1502 of FIG. 15 may execute a first portion of the machine readable instructions represented by the flowchart(s) of FIGS. 9-13 to perform first operation(s)/function(s), the FPGA circuitry 1600 of FIG. 16 may be configured and/or structured to perform second operation(s)/function(s) corresponding to a second portion of the machine readable instructions represented by the flowcharts of FIG. 9-13, and/or an ASIC may be configured and/or structured to perform third operation(s)/function(s) corresponding to a third portion of the machine readable instructions represented by the flowcharts of FIGS. 9-13.

It should be understood that some or all of the circuitry of FIG. 8 may, thus, be instantiated at the same or different times. For example, same and/or different portion(s) of the microprocessor 1500 of FIG. 15 may be programmed to execute portion(s) of machine-readable instructions at the same and/or different times. In some examples, same and/or different portion(s) of the FPGA circuitry 1600 of FIG. 16 may be configured and/or structured to perform operations/functions corresponding to portion(s) of machine-readable instructions at the same and/or different times.

In some examples, some or all of the circuitry of FIG. 8 may be instantiated, for example, in one or more threads executing concurrently and/or in series. For example, the microprocessor 1500 of FIG. 15 may execute machine readable instructions in one or more threads executing concurrently and/or in series. In some examples, the FPGA circuitry 1600 of FIG. 16 may be configured and/or structured to carry out operations/functions concurrently and/or in series. Moreover, in some examples, some or all of the circuitry of FIG. 8 may be implemented within one or more virtual machines and/or containers executing on the microprocessor 1500 of FIG. 15.

In some examples, the programmable circuitry 1412 of FIG. 14 may be in one or more packages. For example, the microprocessor 1500 of FIG. 15 and/or the FPGA circuitry 1600 of FIG. 16 may be in one or more packages. In some examples, an XPU may be implemented by the programmable circuitry 1412 of FIG. 14, which may be in one or more packages. For example, the XPU may include a CPU (e.g., the microprocessor 1500 of FIG. 15, the CPU 1620 of FIG. 16, etc.) in one package, a DSP (e.g., the DSP 1622 of FIG. 16) in another package, a GPU in yet another package, and an FPGA (e.g., the FPGA circuitry 1600 of FIG. 16) in still yet another package.

From the foregoing, it will be appreciated that example systems, apparatus, articles of manufacture, and methods have been disclosed that enable a fiber calibration process to be completed in much less time than existing calibration techniques by reducing how much a reference fiber block to be calibrated needs to move. Specifically, in some examples, the fiber calibration process is accomplished while moving the reference fiber block along only one of the three axes of an XYZ coordinate system (e.g., without moving the reference fiber block along the lateral (X) and vertical (Z) axes). This is made possible by implementing the reference fiber block with a multi-core optical fiber having one or more linear arrays of cores. Examples disclosed herein also improve the lens alignment process (following the fiber calibration process) by enabling variations in optical components of different production units to be accounted for in a way that is not possible with existing lens alignment processes. Specifically, the linear array of multiple cores in the reference fiber block provide multiple data points that make it possible to interpolate the an advantageous (e.g., an optimal) position for the lens regardless of variations in the lens, the laser, and/or other factors between different production units. Disclosed systems, apparatus, articles of manufacture, and methods are accordingly directed to one or more improvement(s) in the operation of a machine such as a computer or other electronic and/or mechanical device.

Further examples and combinations thereof include the following:
Example 1 includes an apparatus comprising interface circuitry, machine readable instructions, and programmable circuitry to at least one of instantiate or execute the machine readable instructions to monitor optical power outputs of different cores in a linear array of cores in a multi-core optical fiber as a lens is moved relative to the multi-core optical fiber, the optical power outputs based on light that is emitted from a photonic integrated circuit and passes through the lens, and determine a final position for the lens relative to the photonic integrated circuit based on the optical power outputs.
Example 2 includes the apparatus of example 1, wherein the multi-core optical fiber is associated with a reference fiber block, and the programmable circuitry is to determine a calibrated position for the reference fiber block based on movement of the reference fiber block in a first direction and without movement of the reference fiber block in any direction transverse to the first direction.
Example 3 includes the apparatus of example 2, wherein the programmable circuitry is to determine the calibrated position for the reference fiber block based on different peak power outputs detected along the linear array of cores at different depth positions for the reference fiber block relative to the photonic integrated circuit, the different depth positions corresponding to different points along the first direction.
Example 4 includes the apparatus of example 1, wherein the programmable circuitry is to determine a first lens position corresponding to a first peak power associated with a first core in the linear array of cores, determine a second lens position corresponding to a second peak power associated with a second core in the linear array of cores, and define a vector along the linear array of cores based on the first and second lens positions, movement of the lens to follow a path defined by the vector.
Example 5 includes the apparatus of example 4, wherein the programmable circuitry is to determine a ratio of a change in fiber core offset distance to a change in lens offset distance, and determine a highest peak power for the path, the highest peak power corresponding to a highest value detected for the optical power outputs, the final position for the lens determined based on the ratio and the highest peak power.
Example 6 includes the apparatus of example 5, wherein the ratio is a first ratio, and the highest peak power is a first highest peak power, the programmable circuitry to determine other ratios of changes in other fiber core offset distances along other paths of the lens to changes in other lens offset distances along corresponding ones of the other paths, determine other highest peak powers for the other paths, the first ratio and the first highest peak power associated with the multi-core optical fiber at a first distance from the photonic integrated circuit, the other ratios and the other highest peak powers associated with the multi-core optical fiber at other distances from the photonic integrated circuit, the other distances different than the first distance, determine a calibrated depth position for the multi-core optical fiber based on the first ratio and the other ratios and based on the first highest peak power and other highest peak powers, and determine the final position for the lens when the multi-core optical fiber is fixed at the calibrated depth position.
Example 7 includes the apparatus of example 4, wherein the programmable circuitry is to interpolate the final position for the lens between the first and second lens positions based on a maximum point on a curve that fits a plot of the first and second peak powers.
Example 8 includes the apparatus of example 1, wherein the programmable circuitry is to cause the lens to be moved to the final position to facilitate attachment of the lens to the photonic integrated circuit.
Example 9 includes the apparatus of example 1, further including the multi-core optical fiber.
Example 10 includes the apparatus of example 9, wherein the linear array of cores is a first linear array that extends in a first direction across a cross-section of the multi-core optical fiber, the multi-core optical fiber including a second linear array of cores that extend in a second direction transverse to the first direction.
Example 11 includes the apparatus of example 9, wherein adjacent ones of the cores in the linear array of cores are spaced apart by 35 µm or less.
Example 12 includes a non-transitory machine readable storage medium comprising instructions to cause programmable circuitry to at least monitor optical power outputs of different cores in a linear array of cores in a multi-core optical fiber as a lens is moved relative to the multi-core optical fiber, the optical power outputs based on light that is emitted from a photonic integrated circuit and passes through the lens, and determine a final position for the lens relative to the photonic integrated circuit based on the optical power outputs.
Example 13 includes the non-transitory machine readable storage medium of example 12, wherein the multi-core optical fiber is associated with a reference fiber block, and the instructions cause the programmable circuitry to determine a calibrated position for the reference fiber block based on movement of the reference fiber block in a first direction and without movement of the reference fiber block in any direction transverse to the first direction.
Example 14 includes the non-transitory machine readable storage medium of example 13, wherein the instructions cause the programmable circuitry to determine the calibrated position for the reference fiber block based on different peak power outputs detected along the linear array of cores at different depth positions for the reference fiber block relative to the photonic integrated circuit, the different depth positions corresponding to different points along the first direction.
Example 15 includes the non-transitory machine readable storage medium of example 12, wherein the instructions cause the programmable circuitry to determine a first lens position corresponding to a first peak power associated with a first core in the linear array of cores, determine a second lens position corresponding to a second peak power associated with a second core in the linear array of cores, and define a vector along the linear array of cores based on the first and second lens positions, movement of the lens to follow a path defined by the vector.
Example 16 includes the non-transitory machine readable storage medium of example 15, wherein the instructions cause the programmable circuitry to determine a ratio of a change in fiber core offset distance to a change in lens offset distance, and determine a highest peak power for the path, the highest peak power corresponding to a highest value detected for the optical power outputs, the final position for the lens determined based on the ratio and the highest peak power.
Example 17 includes the non-transitory machine readable storage medium of example 16, wherein the ratio is a first ratio, and the highest peak power is a first highest peak power, the instructions to cause the programmable circuitry to determine other ratios of changes in other fiber core offset distances along other paths of the lens to changes in other lens offset distances along corresponding ones of the other paths, determine other highest peak powers for the other paths, the first ratio and the first highest peak power associated with the multi-core optical fiber at a first distance from the photonic integrated circuit, the other ratios and the other highest peak powers associated with the multi-core optical fiber at other distances from the photonic integrated circuit, the other distances different than the first distance, determine a calibrated depth position for the multi-core optical fiber based on the first ratio and the other ratios and based on the first highest peak power and other highest peak powers, and determine the final position for the lens when the multi-core optical fiber is fixed at the calibrated depth position.
Example 18 includes the non-transitory machine readable storage medium of example 15, wherein the instructions are to cause the programmable circuitry to interpolate the final position for the lens between the first and second lens positions based on a maximum point on a curve that fits a plot of the first and second peak powers.
Example 19 includes a method comprising monitor optical power outputs of different cores in a linear array of cores in a multi-core optical fiber as a lens is moved relative to the multi-core optical fiber, the optical power outputs based on light that is emitted from a photonic integrated circuit and passes through the lens, and fix a final position for the lens relative to the photonic integrated circuit based on the optical power outputs.
Example 20 includes the method of example 19, wherein the multi-core optical fiber is associated with a reference fiber block, the method further including determining a calibrated position for the reference fiber block based on movement of the reference fiber block in a first direction and without movement of the reference fiber block in any direction transverse to the first direction.
Example 21 includes the method of example 20, further including determining the calibrated position for the reference fiber block based on different peak power outputs detected along the linear array of cores at different depth positions for the reference fiber block relative to the photonic integrated circuit, the different depth positions corresponding to different points along the first direction.
Example 22 includes the method of example 19, further including determining a first lens position corresponding to a first peak power associated with a first core in the linear array of cores, determining a second lens position corresponding to a second peak power associated with a second core in the linear array of cores, and defining a vector along the linear array of cores based on the first and second lens positions, movement of the lens to follow a path defined by the vector.
Example 23 includes the method of example 22, further including determining a ratio of a change in fiber core offset distance to a change in lens offset distance, and determining a highest peak power for the path, the highest peak power corresponding to a highest value detected for the optical power outputs, the final position for the lens determined based on the ratio and the highest peak power.
Example 24 includes the method of example 23, wherein the ratio is a first ratio, and the highest peak power is a first highest peak power, the method further including determining other ratios of changes in other fiber core offset distances along other paths of the lens to changes in other lens offset distances along corresponding ones of the other paths, determining other highest peak powers for the other paths, the first ratio and the first highest peak power associated with the multi-core optical fiber at a first distance from the photonic integrated circuit, the other ratios and the other highest peak powers associated with the multi-core optical fiber at other distances from the photonic integrated circuit, the other distances different than the first distance, determining a calibrated depth position for the multi-core optical fiber based on the first ratio and the other ratios and based on the first highest peak power and other highest peak powers, and determining the final position for the lens when the multi-core optical fiber is fixed at the calibrated depth position.
Example 25 includes the method of example 22, further including interpolating the final position for the lens between the first and second lens positions based on a maximum point on a curve that fits a plot of the first and second peak powers.
Example 26 includes an apparatus comprising interface circuitry, machine readable instructions, and programmable circuitry to at least one of instantiate or execute the machine readable instructions to determine different peak powers detected through different cores of a multi-core optical fiber, ones of the different cores extending along a first axis of an XYZ coordinate system, the cores distributed in two dimensions corresponding to a second axis and a third axis of the XYZ coordinate system, the first axis orthogonal to the second and third axis, the second six orthogonal to the third axis, the different peak power detected through the different cores based on light from a photonic integrated circuit that passes through a lens, the different peak powers based on movement of the multi-core fiber along only one of the first axis, the second axis, or the third axes, and determine a final position for the lens relative to the photonic integrated circuit based on the different peak powers.
Example 27 includes the apparatus of example 26, wherein the different peak powers are based on movement of the multi-core fiber along only the first axis.
Example 28 includes the apparatus of example 27, wherein different sets of the different peak powers are detected while moving the lens relative to the multi-core fiber at different fixed positions along the first axis.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine readable instructions; and
programmable circuitry to at least one of instantiate or execute the machine readable instructions to:
monitor optical power outputs of different cores in a linear array of cores in a multi-core optical fiber as a lens is moved relative to the multi-core optical fiber, the optical power outputs based on light that is emitted from a photonic integrated circuit and passes through the lens; and
determine a final position for the lens relative to the photonic integrated circuit based on the optical power outputs.

2. The apparatus of claim 1, wherein the multi-core optical fiber is associated with a reference fiber block, and the programmable circuitry is to determine a calibrated position for the reference fiber block based on movement of the reference fiber block in a first direction and without movement of the reference fiber block in any direction transverse to the first direction.

3. The apparatus of claim 2, wherein the programmable circuitry is to determine the calibrated position for the reference fiber block based on different peak power outputs detected along the linear array of cores at different depth positions for the reference fiber block relative to the photonic integrated circuit, the different depth positions corresponding to different points along the first direction.

4. The apparatus of any one of claims 1-3, wherein the programmable circuitry is to:
determine a first lens position corresponding to a first peak power associated with a first core in the linear array of cores;
determine a second lens position corresponding to a second peak power associated with a second core in the linear array of cores; and
define a vector along the linear array of cores based on the first and second lens positions, movement of the lens to follow a path defined by the vector.

5. The apparatus of claim 4, wherein the programmable circuitry is to:
determine a ratio of a change in fiber core offset distance to a change in lens offset distance; and
determine a highest peak power for the path, the highest peak power corresponding to a highest value detected for the optical power outputs, the final position for the lens determined based on the ratio and the highest peak power.

6. The apparatus of claim 5, wherein the ratio is a first ratio, and the highest peak power is a first highest peak power, the programmable circuitry to:
determine other ratios of changes in other fiber core offset distances along other paths of the lens to changes in other lens offset distances along corresponding ones of the other paths;
determine other highest peak powers for the other paths, the first ratio and the first highest peak power associated with the multi-core optical fiber at a first distance from the photonic integrated circuit, the other ratios and the other highest peak powers associated with the multi-core optical fiber at other distances from the photonic integrated circuit, the other distances different than the first distance;
determine a calibrated depth position for the multi-core optical fiber based on the first ratio and the other ratios and based on the first highest peak power and other highest peak powers; and
determine the final position for the lens when the multi-core optical fiber is fixed at the calibrated depth position.

7. The apparatus of any one of claims 4-6, wherein the programmable circuitry is to interpolate the final position for the lens between the first and second lens positions based on a maximum point on a curve that fits a plot of the first and second peak powers.

8. The apparatus of any one of claims 1-7, wherein the programmable circuitry is to cause the lens to be moved to the final position to facilitate attachment of the lens to the photonic integrated circuit.

9. The apparatus of any one of claims 1-8, further including the multi-core optical fiber.

10. The apparatus of claim 9, wherein the linear array of cores is a first linear array that extends in a first direction across a cross-section of the multi-core optical fiber, the multi-core optical fiber including a second linear array of cores that extends in a second direction transverse to the first direction.

11. The apparatus of any one of claims 9 or 10, wherein adjacent ones of the cores in the linear array of cores are spaced apart by 35 µm or less.

12. A method comprising:
monitor optical power outputs of different cores in a linear array of cores in a multi-core optical fiber as a lens is moved relative to the multi-core optical fiber, the optical power outputs based on light that is emitted from a photonic integrated circuit and passes through the lens; and
fix a final position for the lens relative to the photonic integrated circuit based on the optical power outputs.

13. The method of claim 12, wherein the multi-core optical fiber is associated with a reference fiber block, the method further including determining a calibrated position for the reference fiber block based on movement of the reference fiber block in a first direction and without movement of the reference fiber block in any direction transverse to the first direction.

14. The method of any one of claims 12 or 13, further including:
determining a first lens position corresponding to a first peak power associated with a first core in the linear array of cores;
determining a second lens position corresponding to a second peak power associated with a second core in the linear array of cores; and
defining a vector along the linear array of cores based on the first and second lens positions, movement of the lens to follow a path defined by the vector.

15. Machine-readable storage including machine-readable instructions, when executed, to implement a method or realize an apparatus as claimed in any preceding claim.
